Europäisches Patentamt

European Patent Office

Office européen des brevets

(19)

(11) Numéro de publication: **0 210 916**
**A1**

(12) # DEMANDE DE BREVET EUROPEEN

(21) Numéro de dépôt: 86401615.9

(22) Date de dépôt: 18.07.86

(51) Int. Cl.⁴: **G01N 9/12** , G01G 5/02 ,
G01G 17/04

(30) Priorité: 23.07.85 FR 8511235

(43) Date de publication de la demande:
04.02.87 Bulletin 87/06

(84) Etats contractants désignés:
BE CH DE GB IT LI NL

(71) Demandeur: **COMMISSARIAT A L'ENERGIE
ATOMIQUE**
**29-31, rue de la Fédération**
**F-75015 Paris(FR)**

(72) Inventeur: **Boullet, Joseph**
**16, rue de la Croix d'Andolle**
**F-60440 Nanteuil-Le-Haudoin(FR)**
Inventeur: **Cotro, Jean-François**
**52, rue de l'Egalité**
**F-59320 Hallenes-Lez-Haubourdin(FR)**
Inventeur: **De Jongh, Philippe**
**30, Avenue René Coty**
**F-75014 Paris(FR)**
Inventeur: **Hours, Philippe**
**11, rue Paul Déroulède**
**F-94100 Saint-Maur-Des-Fosses(FR)**
Inventeur: **Peaucelle, Thomas**
**36, Boulevard du Château**
**F-92200 Neuilly-sur-Seine(FR)**

(74) Mandataire: **Mongrédien, André et al**
**c/o BREVATOME 25, rue de Ponthieu**
**F-75008 Paris(FR)**

(54) **Appareil de mesure du poids apparent d'une boue chargeant un liquide, appareil et procédé de mesure de l'indice de Ponsar d'une telle boue.**

(57) Appareil de mesure automatique du poids apparent d'une boue chargeant un liquide, système de mesure automatique de l'indice de PONSAR d'une telle boue, utilisant l'appareil, et procédé de mesure de cet indice.

Le poids apparent d'un litre de liquide clarifié est obtenu à l'aide de moyens électroniques (16, 60, 64) de mesure de la différence d'immersion, dans un réservoir (24) de liquide clarifié, d'un flacon (26) successivement rempli de liquide chargé de boue et de liquide clarifié. Des moyens (34) de détection permettent de mesurer le volume de boue décantée en 1/2h dans une éprouvette (32) remplie de 1l de liquide chargé de boue et de 1,5l de liquide clarifié. Le calcul du rapport volume/poids donne ensuite l'indice de PONSAR.

Application à la conduite de stations d'épuration.

FIG. 2

## APPAREIL DE MESURE AUTOMATIQUE DU POIDS APPARENT D'UNE BOUE CHARGEANT UN LIQUIDE, SYSTEME DE MESURE AUTOMATIQUE DE L'INDICE DE PONSAR D'UNE TELLE BOUE, UTILISANT L'APPAREIL, ET PROCEDE DE MESURE DE CET INDICE

La présente invention concerne un appareil de mesure automatique du poids apparent d'une boue chargeant un liquide, un système de mesure automatique de l'Indice de PONSAR d'une telle boue, utilisant l'appareil, et un procédé de mesure de cet indice. Elle s'applique notamment à la conduite de stations d'épuration d'eaux usées fonctionnant sur le principe des boues activées (épuration biologique).

On connaît déjà, par le brevet FR-A-2284108, un procédé de mesure de l'indice de PONSAR d'une boue chargeant un liquide, indice dont on donnera par la suite une définition, ainsi que des dispositifs de mesure de cet indice. De tels dispositifs sont également commercialisés par la société HYDROCURE.

Ce procédé et ces dispositifs présentent l'inconvénient d'être manuels, nécessitant ainsi une intervention assez longue, et donc coûteuse, d'un opérateur.

La présente invention a pour but de remédier à cet inconvénient en proposant un appareil de mesure automatique du poids apparent d'une boue chargeant un liquide, un système de mesure automatique de l'indice de PONSAR d'une telle boue, utilisant ledit appareil, ainsi qu'un procédé de mesure de cet indice, mis en oeuvre dans ledit système.

De façon précise, la présente invention a tout d'abord pour objet un appareil de mesure du poids apparent d'une boue chargeant un liquide, caractérisé en ce qu'il comprend :

-un récipient,

-des moyens de remplissage en liquide clarifié et de vidange de ce récipient,

-un flacon apte à flotter dans le récipient, rempli de liquide clarifié, lorsque ce flacon est vide,

-des moyens de déplacement du flacon, prévus pour amener ce flacon dans le liquide clarifié du récipient et l'en retirer,

-des moyens de remplissage en liquide clarifié, de remplissage en liquide chargé de boue et de vidange du flacon,

-un ensemble de mesure électrique, apte à fournir un signal électrique fonction de la position du flacon dans le récipient, et

-un système électronique de traitement, prévu pour déterminer le poids apparent d'un volume de liquide chargé de boue, pesé dans le liquide clarifié, à partir de signaux électriques correspondant aux positions, dans le récipient rempli de liquide clarifié, du flacon rempli respectivement de liquide clarifié et de liquide chargé de boue, en commandant de façon appropriée les moyens de remplissage et de vidange et les moyens de déplacement du flacon.

De préférence, le flacon comprend un flotteur intégré et a une forme externe permettant l'évacuation de bulles d'air lors de l'immersion du flacon dans le liquide clarifié.

Dans un mode de réalisation avantageux de l'invention, le flacon a un fond conique et comprend une paroi externe cylindrique et une paroi interne délimitant entre elles un espace qui est fermé de façon étanche.

De préférence, le flacon est en un matériau qui, lorsqu'il est plongé dans le liquide clarifié n'absorbe pas celui-ci ou, au contraire, se sature rapidement en ce liquide clarifié. Par "matériau qui se sature rapidement", on entend un matériau qui se sature en un temps t très court devant le temps t, pendant lequel le flacon reste dans le liquide clarifié du récipient (t inférieur à environ 0,1 t, par exemple).

De préférence également, les moyens de déplacement du flacon comprennent une nacelle apte à soutenir le flacon et percée de trous permettant la circulation du liquide clarifié, et des moyens de déplacement de la nacelle.

Dans un mode de réalisation particulier de l'appareil objet de l'invention, l'ensemble de mesure électrique comprend une bobine fixe par rapport au récipient, une tige métallique rendue solidaire du flacon et apte à constituer un noyau pour la bobine et à coulisser dans celle-ci lorsque le flacon est déplacé dans le récipient, modifiant ainsi l'inductance de la bobine, et des moyens de mesure d'une grandeur fonction de cette inductance, aptes à fournir ledit signal électrique.

Cette grandeur peut être l'inductance elle-même et, de préférence, les moyens de mesure comprennent un selfmètre.

Dans une réalisation avantageuse, l'appareil objet de l'invention comprend en outre une sonde à électrodes, prévue pour informer le système électronique de traitement du remplissage du flacon.

La présente invention concerne également un système de mesure de l'indice de PONSAR d'une boue chargeant un liquide, caractérisé en ce qu'il comprend :

-l'ensemble de mesure du poids apparent qui est également objet de l'invention,

-un autre récipient,

-des moyens de remplissage en liquide clarifié, de remplissage en liquide chargé de boue et de vidange de cet autre récipient,

-des moyens de détection électrique, aptes à fournir d'autres signaux électriques, fonctions du niveau de boue décantée dans l'autre récipient préalablement rempli de liquide clarifié et de liquide chargé de boue,

et en ce que le système électronique de traitement est en outre prévu pour déterminer, à partir de ces autres signaux, le volume de boue décantée dans l'autre récipient, correspondant à une quantité prédéterminée de liquide chargé de boue, et pour déterminer également l'indice de PONSAR de la boue, en utilisant ledit poids apparent et ledit volume de boue décantée, en commandant de façon appropriée les moyens de remplissage et de vidange.

Selon un mode de réalisation préféré du système de mesure objet de l'invention, les moyens de détection comprennent un ensemble-détecteur comportant au moins un photo-émetteur et au moins un photo-détecteur, rendus solidaires et placés en regard l'un de l'autre, de part et d'autre de l'autre récipient, cet autre récipient et le liquide clarifié étant transparents à la lumière que chaque photo-émetteur est capable d'émettre, et des moyens de déplacement de cet ensemble-détecteur, aptes à déplacer celui-ci le long de l'autre récipient, sensiblement à partir du fond de ce dernier, et commandés par le système électronique de traitement, le photo-détecteur étant destiné à informer alors ce système électronique de traitement de la position de la surface de séparation entre la boue décantée et le liquide clarifié dans l'autre récipient.

De préférence, les moyens de déplacement de l'ensemble-détecteur comprennent un moteur pas-à-pas et le système électronique de traitement est prévu pour déterminer le nombre de pas lors du déplacement de l'ensemble-détecteur sensiblement à partir du fond de l'autre récipient.

La présente invention concerne enfin un procédé de mesure de l'indice de PONSAR, mis en oeuvre dans le système de mesure automatique également objet de l'invention, procédé caractérisé en ce qu'il comprend les étapes suivantes :

-remplissage du flacon en liquide chargé de boue,

-remplissage du récipient en liquide clarifié,

-remplissage de l'autre récipient d'une quantité déterminée de liquide clarifié,

-remplissage de cet autre récipient d'une quantité déterminée de liquide chargé de boue,

-plongée du flacon dans le récipient,

-attente d'une durée déterminée, pour l'atteinte par le flacon d'une première position stable dans le récipient,

-prise de mesures par l'ensemble de mesure,

-calcul par le système électronique de traitement, d'une première quantité fonction de la première position,

-remontée du flacon,

-vidange et rinçage de celui-ci,

-remplissage du flacon en liquide clarifié,

-plongée du flacon dans le récipient,

-attente d'une durée déterminée pour l'atteinte par le flacon d'une seconde position stable dans le récipient,

-prise de mesures par l'ensemble de mesure,

-calcul par le système électronique de traitement d'une seconde quantité fonction de la seconde position,

-calcul, par le système électronique de traitement, du poids apparent de la boue, à l'aide de la première et de la seconde quantités,

-détermination, par ce système électronique, du volume de boue décantée dans l'autre récipient, et

-détermination, par ledit système électronique, de l'indice de PONSAR, à partir de ce volume et du poids apparent de boue.

Dans un mode de mise en oeuvre préféré du procédé objet de l'invention, utilisant la nacelle mentionnée plus haut, l'étape de plongée du flacon rempli de liquide chargé de boue comprend elle-même les étapes suivantes :

-descente de la nacelle sous la surface du liquide clarifié,

-attente d'un temps déterminé permettant la décantation de la boue dans le flacon et l'imprégnation de ce flacon en liquide clarifié,

-légère remontée de la nacelle, provoquant l'aspiration du flacon sous la surface du liquide clarifié,

-descente de la nacelle vers le fond du récipient, à une position d'attente,

et l'étape de plongée du flacon rempli de liquide clarifié comprend elle-même les étapes suivantes :

-descente de la nacelle sous la surface du liquide clarifié puis légère remontée de cette nacelle, provoquant l'aspiration du flacon sous la surface du liquide clarifié, et

-descente de la nacelle à la position d'attente.

L'invention sera mieux comprise de la lecture de la description qui suit, d'exemples de réalisation donnés à titre purement indicatif et nullement limitatif, en référence aux dessins annexés sur lesquels :

-la figure 1 est une vue schématique d'un mode de réalisation particulier du système de mesure automatique de l'indice de PONSAR, objet de l'invention,

-la figure 2 est une vue schématique d'un dispositif de mesure du volume de boue décantée et d'un dispositif de mesure du poids apparent faisant partie de ce système,

-la figure 3 est une vue schématique d'une partie du dispositif de mesure du volume de boue décantée,

-la figure 4 est une vue schématique d'une partie du dispositif de mesure du poids apparent,

-la figure 5 est une vue schématique d'un mode de réalisation particulier du flacon à flotteur intégré utilisé dans ce dispositif de mesure du poids apparent,

-la figure 6 est un diagramme représentant les variations de l'inductance d'une bobine utilisée dans ce dispositif de mesure du poids apparent, en fonction de l'enfoncement du flacon dans un récipient faisant partie de ce dispositif,

-la figure 7 est une vue schématique d'une interface de puissance faisant partie du système de mesure automatique,

-la figure 8 est un schéma de principe de la commande d'électrovannes et d'un moteur, utilisés dans ce système,

-la figure 9 est un schéma explicatif de la commande de ces électrovannes,

-les figures 10 et 11 sont des schémas explicatifs de la commande d'autres électrovannes du système de mesure automatique,

-la figure 12 est un schéma électronique d'un ensemble-détecteur utilisé dans le dispositif de mesure du volume de boue décantée,

-la figure 13 est un schéma d'un ensemble électronique associé à une sonde de détection du remplissage du flacon,

-la figure 14 est une vue schématique d'un selfmètre utilisé dans le dispositif de mesure du poids apparent,

-la figure 15 est un chronogramme de signaux fournis par ce selfmètre, et

-la figure 16 est un organigramme d'un programme de gestion du système de mesure automatique.

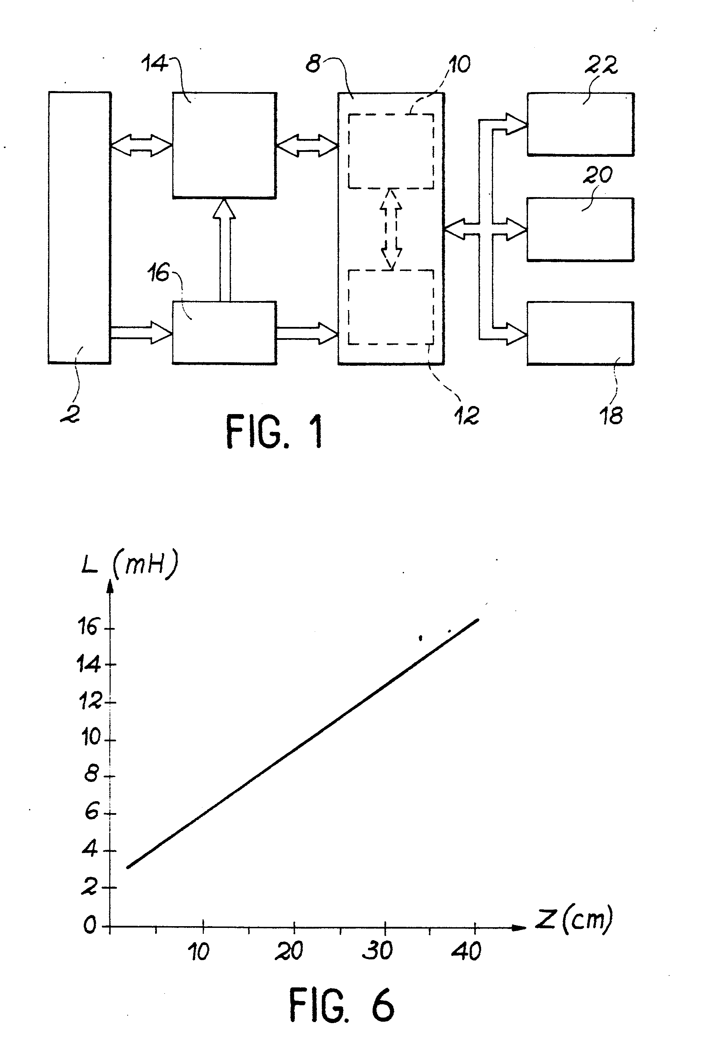

Sur la figure 1, on a représenté schématiquement un mode de réalisation particulier du système objet de l'invention, destiné à la mesure automatique de l'indice de PONSAR.

Cet indice, qui permet de contrôler la qualité des boues des stations d'épuration, et ce, à tous les stades du processus d'épuration, peut être défini comme le rapport V/P dans lequel V représente le volume tassé en une demi-heure (généralement exprimé en millilitres), c'est-à-dire le volume de dépôt obtenu après décantation pendant une demi-heure d'un litre de liquide chargé de boue dans un litre et demi de liquide clarifié, et P représente le poids apparent (ou plus exactement la masse apparente), exprimé en grammes, d'un litre de liquide chargé de boue, pesé dans le même liquide clarifié.

Le liquide est de l'eau dans le cas d'une station d'épuration et l'on prend dans ce qui suit l'exemple d'une telle station.

Le système représenté sur la figure 1 comprend :

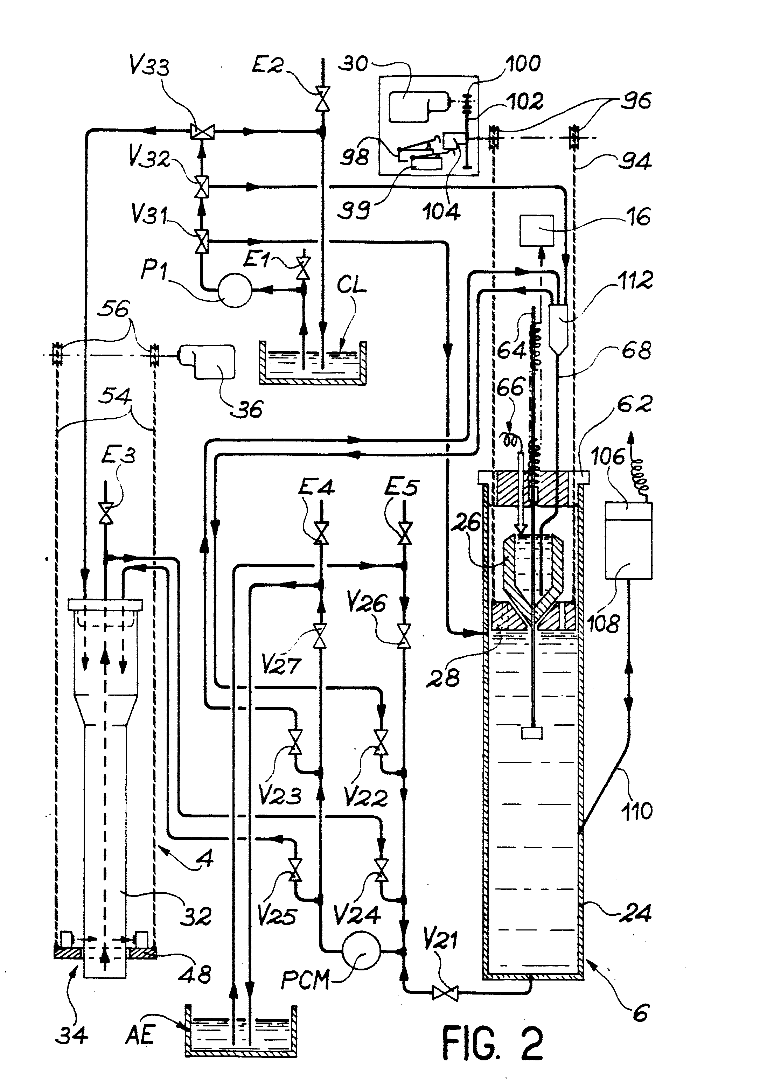

-un ensemble 2 comportant un dispositif 4 pour la mesure du volume V (figure 2) et un dispositif 6 pour la mesure du poids P (figure 2), cet ensemble pouvant être placé dans une armoire dans laquelle peuvent être également placées des pompes, des électrovannes, et des moteurs pour le fonctionnement de ces dispositifs,

-un ensemble informatique 8 comportant un ordinateur 10, du type GOUPIL 2 par exemple, muni d'une carte d'entrées-sorties 12, et prévu pour commander les dispositifs et calculer l'indice de PONSAR,

-une interface de puissance 14 assurant la liaison entre l'ensemble informatique 8 et l'ensemble 2 des dispositifs, et

-un selfmètre 16 qui est relié, comme on le voit sur la figure 1, à l'ensemble 2, à l'ensemble informatique 8 et à l'interface 14, et qui est utilisé pour la mesure du poids apparent P.

L'ensemble informatique 8 est également relié à un lecteur de disquettes 18 dans lequel est enregistré le programme permettant le fonctionnement du système de mesure automatique, à un moniteur vidéo 20 permettant l'affichage des résultats des mesures effectuées et à une imprimante 22 permettant de conserver la trace de ces résultats.

Sur la figure 2, on a représenté - schématiquement l'ensemble 2 des dispositifs 4 et 6. Le dispositif 6, permettant la mesure du poids apparent, comprend un récipient 24 de forme allongée et de grande capacité, de l'ordre de 20 litres par exemple, appelé par la suite "réservoir", ainsi qu'un flacon 26, une nacelle 28 permettant de soutenir ce flacon et un moteur 30 permettant de déplacer la nacelle 28 dans le réservoir 24.

Le dispositif 4, permettant la mesure du volume de boue décantée, comprend un autre récipient 32 de forme allongée, appelé par la suite "éprouvette", qui a une capacité de l'ordre de trois litres par exemple, ainsi qu'un ensemble-détecteur 34 et un moteur pas-à-pas 36 prévu pour déplacer l'ensemble-détecteur 34 le long de l'éprouvette.

Cette éprouvette 32 a un col 36 évasé (figu re 3), ce qui permet de faire couler doucement l'eau chargée de boue sur le col et donc de faciliter la décantation de cette boue dans l'eau clarifiée dont l'éprouvette est destinée à être remplie. En outre, l'éprouvette est fermée par un couvercle 38 par exemple en plexiglass, qui est percé d'ouvertures permettant respectivement le passage d'un tube 40 destiné au remplissage en eau clarifiée de l'éprouvette, d'un tube 42 destiné au remplissage en eau chargée de boue de ladite éprouvette et enfin d'un tube 44 permettant la vidange de celle-ci. L'extrémité du tube 44, qui se trouve dans l'éprouvette, est située au voisinage du fond de cette éprouvette, tandis que les extrémités des tubes 40 et 42, qui se trouvent dans l'éprouvette sont situées légèrement au-dessus du col de cette éprouvette.

Le couvercle 38 de celle-ci est également percé d'un orifice d'aération 46.

L'ensemble détecteur 34 comprend une tablette 48 de forme par exemple circulaire, entourant l'éprouvette 32 et déplaçable le long de cette éprouvette. La tablette 48 porte au moins une photodiode émettrice 50, de préférence plusieurs photodiodes émettrices, par exemple sept, orientées de façon à envoyer des faisceaux lumineux à travers l'éprouvette 32, cette dernière et l'eau étant transparentes à la lumière émise par les photodiodes. La tablette 48 porte également, en regard des photodiodes 50, un phototransistor 52 destiné à recevoir la lumière émise par les photodiodes 50 et ayant traversé l'éprouvette 32 lorsqu'elle n'en est pas empêchée par de là boue qui se trouverait dans cette éprouvette.

Le moteur pas-à-pas 36, qui est disposé au-dessus de l'éprouvette 32, permet à la tablette 48 de monter ou de descendre le long de l'éprouvette, par l'intermédiaire de câbles 54 reliant cette tablette à des poulies 56 dont la rotation est commandée par le moteur pas-à-pas 36.

Le principe de la mesure du volume de boue décantée est le suivant : après avoir rempli l'éprouvette d'un litre et demi d'eau clarifiée puis d'un litre d'eau chargée de boue, on laisse l'ensemble décanter pendant une demi-heure. Au bout de ce temps, la tablette est déplacée à partir du bas de l'éprouvette vers le haut de celle-ci grâce au moteur pas-à-pas tandis que les photodiodes émettent des rayons lumineux. Tant que ceux-ci rencontrent la boue, qui est opaque à ces rayons lumineux, ils ne peuvent atteindre le phototransistor. Au moment où la tablette atteint le niveau de séparation de l'eau et de la boue décantée dans l'éprouvette, ces rayons lumineux peuvent traverser cette éprouvette et atteindre le phototransistor. Le comptage du nombre de pas effectués par le moteur pas-à-pas 36 permet alors de déterminer la hauteur de boue décantée dans l'éprouvette, et connaissant la section de cette éprouvette, le volume de ladite boue décantée.

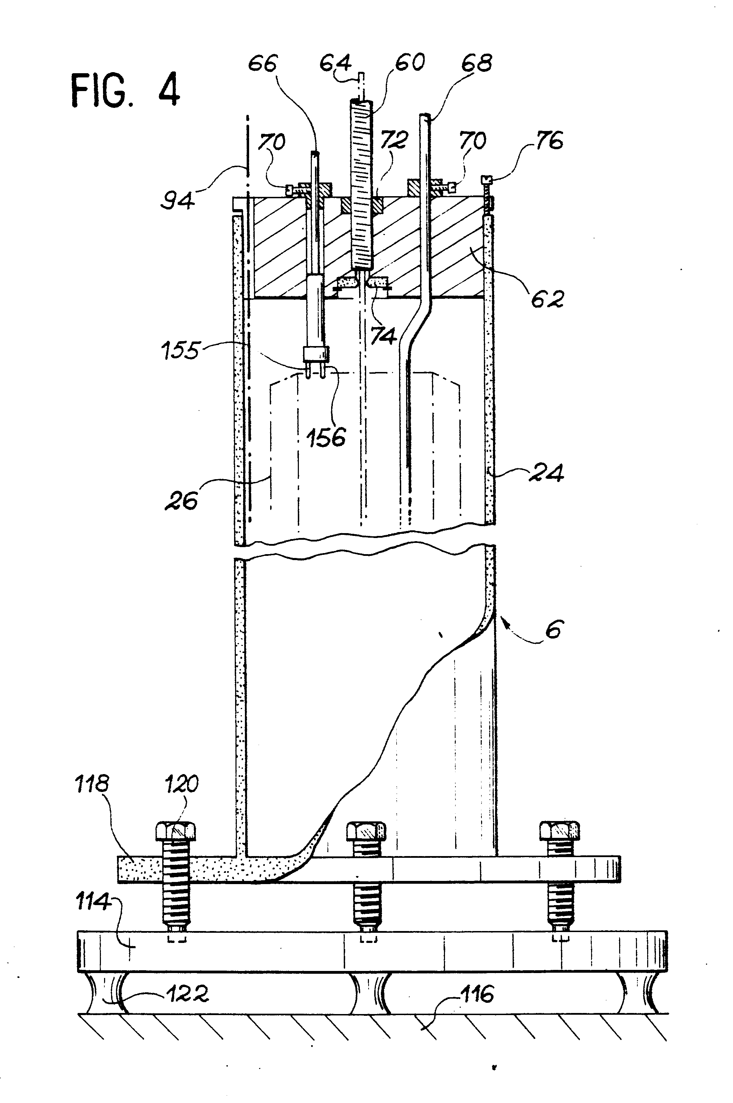

Revenant au dispositif 6 de mesure du poids apparent (figures 2 et 4), ce dispositif comprend un ensemble de mesure électrique comprenant lui-même une bobine 60 fixée sur un support 62 faisant également office de couvercle pour le réservoir 24, et une tige métallique 64, destinée à constituer le noyau de la bobine 60 et fixée au flacon 26 de manière à pouvoir coulisser dans la bobine convenablement orientée à cet effet, lorsque le flacon est déplacé dans le réservoir.

La bobine 60 est constituée de plusieurs couches de spires de fil métallique, par exemple 4 couches de fil de cuivre, qui sont enroulées sur un tube de verre. La bobine est reliée au selfmètre 16 permettant d'en mesurer l'inductance. Le support 62 de la bobine 60 est percé d'une ouverture permettant le passage d'une sonde 66 de détection du remplissage du flacon, et d'une autre ouverture permettant le passage d'un tube 68 destiné au remplissage et à la vidange de ce flacon. Des bagues 70 de maintien et de serrage sont prévues pour maintenir en place la sonde 66 et le tube 68 par rapport au support 62.

La bobine 60 s'étend au-dessus du réservoir 24, parallèlement à celui-ci. Des moyens de réglage mécanique 61 de la bobine sont prévus pour régler ce parallélisme (figure 4). Une autre ouverture traversant le support 62 est destinée à recevoir la partie inférieure de la bobine 60 qui est fixée au support 62 par l'intermédiaire d'une autre bague de maintien et de serrage 72. De préférence, une bague en polytétrafluoréthylène 74 est prévue à la partie inférieure de cette autre ouverture de façon à être traversée par toute portion de la tige 64 avant que ladite portion ne pénètre dans la bobine 60 lorsque le flacon est déplacé vers le haut du réservoir. La bague 74, qui est maintenue en place par un clip approprié, par rapport au support 62, a un diamètre intérieur qui est inférieur au diamètre intérieur du tube de verre et permet de réduire les frottements du noyau dans le tube de verre de la bobine, lesquels frottements entraîneraient sinon des erreurs de mesure. En outre, la présence de la bague 74 évite la formation de dépôts solides le long du tube de verre, lesquels dépôts risqueraient également d'entraîner des erreurs de mesure. Des vis 76 sont également prévues pour le réglage de l'orientation du support 62 par rapport au réservoir, de façon à minimiser lesdits frottements.

La tige 64, qui constitue le noyau de la bobine 60, est par exemple en acier doux traité en surface par nickelage chimique (procédé KANIGEN).

Le support 62 comporte en outre, sur son pourtour, des évidements permettant une circulation d'air entre l'intérieur et l'extérieur du réservoir, lorsque le support est en place sur celui-ci.

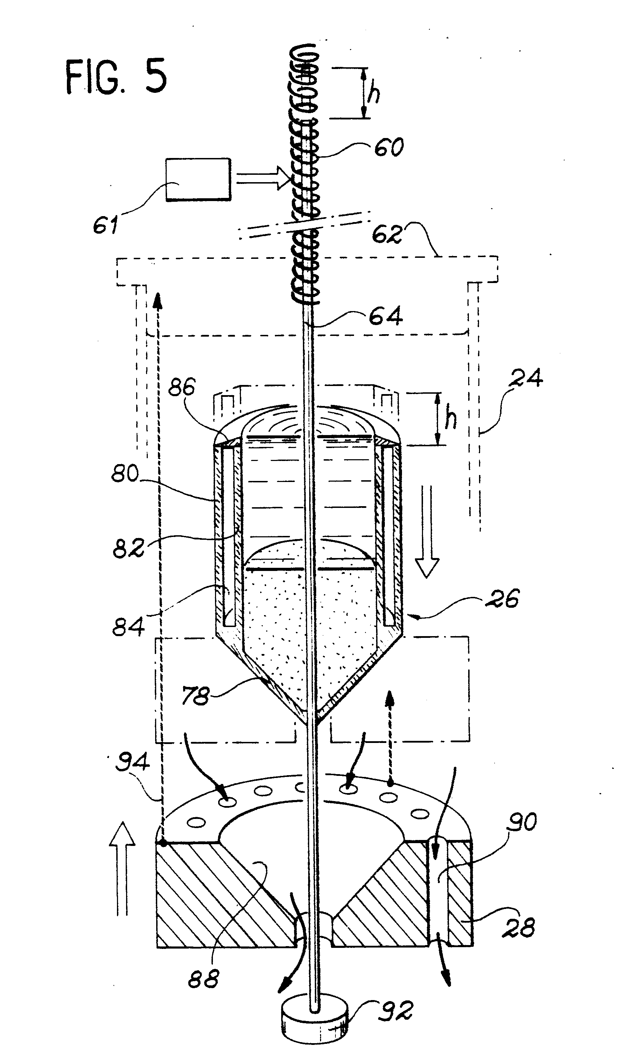

Le flacon 26 (figure 5) est de préférence en polyméthacrylate de méthyle (ALTUGLASS) et comporte un flotteur intégré. En outre, la forme dudit flacon est prévue pour permettre le "glissement" et l'évacuation de bulles d'air lors de l'immersion du flacon dans l'eau clarifiée que le réservoir est destiné à contenir. Plus précisément, le flacon comporte un fond conique 78 prolongé supérieurement par deux parois cylindriques coaxiales 80 et 82 délimitant entre elles un espace 84 rempli d'air, jouant le rôle de flotteur. Cet espace est fermé de façon étanche, d'un côté, par le fond 78 dudit flacon et, de l'autre côté, par une pièce 86 en forme de couronne, fixée aux extrémités supérieures des parois 80 et 82. L'assemblage des éléments du flacon est effectué au moyen d'une colle commercialement disponible, appropriée à la fixation de pièces en polyméthacrylate de méthyle.

La nacelle 28 est pourvue d'un perçage 88 en forme d'entonnoir dans lequel le fond 78 du flacon est destiné s'emboîter. La nacelle 28 est en outre percée de trous 90 qui entourent l'entonnoir 88 et sont destinés à laisser s'écouler l'eau clarifiée lors des mouvements de montée ou de descente de la nacelle dans le réservoir.

La tige 64 est fixée au fond 78 du flacon et s'étend suivant l'axe de celui-ci. Cette tige 64 traverse la nacelle 28 par le perçage 88 de celle-ci. En outre, l'extrémité inférieure de la tige 64 est pourvue d'un lest 92. La longueur de la tige 64 est suffi sante pour que ce lest 92 ne heurte pas la nacelle 88 lorsque celle-ci est descendue à une position d'attente précisée par la suite.

Le moteur 30 est situé au-dessus du réservoir 24 et permet de monter et de descendre la nacelle 28 dans ce réservoir 24 par l'intermédiaire de câbles 94 qui relient la nacelle 28 à des poulies 96 prévues pour être mises en rotation par le moteur 30.

De façon précise, le moteur 30 est prévu pour déplacer la nacelle 28 entre une position haute et une position basse ou position d'attente, dans le réservoir 24. Afin de pouvoir arrêter avec précision la nacelle en l'une ou l'autre de ces positions, deux capteurs 98, 99 de niveau de la nacelle 28, par exemple constitués par deux micro-contacts, sont prévus. Dans l'exemple de réalisation représenté sur la figure 2, une première couronne dentée 100, montée sur l'axe du moteur 30, permet d'entraîner en rotation une seconde couronne dentée 102 montée sur un axe commun aux deux poulies 96. La seconde couronne présente un rapport de démultiplication approprié par rapport à la première, fonction de la différence de niveau entre les positions haute et basse de la nacelle 28, ce rapport étant par exemple égal à 5 dans le mode de réalisation de la figure 2. Une came 104 est fixée à la seconde couronne 102 et actionne l'un ou l'autre des micro-contacts 98 qui est alors porté à un niveau logique 0 ou 1 suivant sa position.

Les divers remplissages et vidanges du flacon son effectués lorsque la nacelle est en position haute, le flacon, supporté par la nacelle, étant alors à une position haute, en dehors de l'eau clarifiée du réservoir. Le tube 68 est conçu pour que son extrémité inférieure soit au voisinage du fond du flacon lorsque celui-ci est en position haute.

Afin de contrôler le remplissage du réservoir 24, un capteur de niveau 106 est prévu. Il s'agit par exemple d'un pressostat se déclenchant par surpression. Ce pressostat est fixé sur un vase d'expansion 108 qui est relié par un conduit 110 au niveau bas du réservoir. Lors du remplissage de celui-ci, l'eau monte dans ce conduit et crée dans le vase d'expansion une surpression qui déclenche le pressostat lorsqu'elle est suffisamment importante. Le pressostat est porté à un niveau logique 0 lorsque le réservoir est vide ou en cours de remplissage, et à un niveau logique 1 lorsque le réservoir est plein.

Le principe de la mesure du poids apparent est le suivant : ce poids apparent est proportionnel à la différence d'immersion h, dans le réservoir rempli d'eau clarifiée, du flacon 26 respectivement rempli d'eau chargée de boue et d'eau clarifiée (figure 5). Or, la différence d'immersion h est proportionnelle à la différence entre l'inductance L2 de la bobine, correspondant à la position d'équilibre du flacon rempli d'eau chargée de boue dans le réservoir, et l'inductance L1 de la bobine, correspondant à la position du flacon rempli d'eau clarifiée dans ce réservoir. Il en résulte que le poids apparent est proportionnel à cette différence d'inductance. Plus précisément, le poids apparent P est reliée à la différence L2-L1 par la formule suivante :

$$P = (L2 - L1) \, R^{-1}.S.v^{-1}.\mu.g$$

dans laquelle R, S, v, $\mu$ et g représentent respectivement la pente de la droite représentant les variations de l'inductance de la bobine en fonction de l'enfoncement du flacon, la section du noyau de la bobine, le volume du flacon, la masse volumique de l'eau clarifiée et l'accélération de la pesanteur.

Dans l'exemple de réalisation représenté sur la figure 2, la pente R est de 0,344 mH/cm, le diamètre du noyau est de 3 millimètres et le volume du flacon est de 0,56 litre. La formule ci-dessus devient alors :

$$P = 0,37 \, (L2 - L1)$$

dans laquelle les inductances sont exprimées en mH et le poids apparent (pour un litre d'eau chargée de boue) en grammes (en ne tenant donc pas compte de la quantité g de la formule ci-dessus).

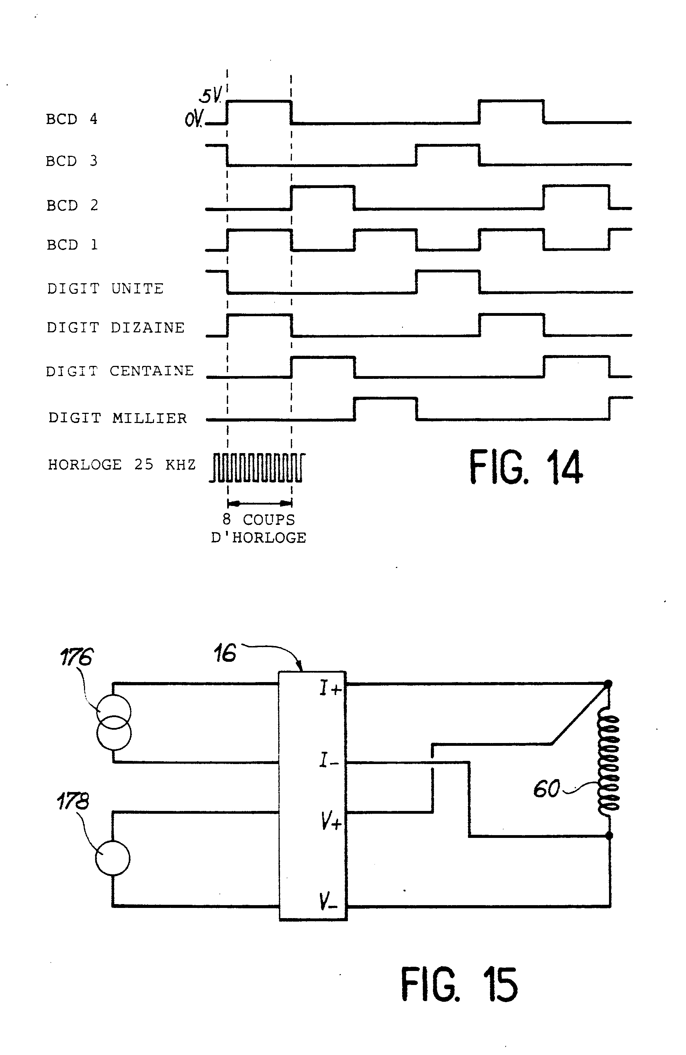

La quantité R peut être déterminée expérimentalement, en traçant les variations de l'inductance L de la bobine, exprimée en mH et mesurée à l'aide d'un selfmètre (voir figure 14), en fonction de l'enfoncement Z du flacon exprimé en cm. Comme on l'a vu plus haut, la quantité R est la pente de la droite ainsi obtenue.

Lorsque le flacon est en position haute, la tige 64 dépasse de la partie supérieure de la bobine 60, mais, lors des mesures respectivement effectuées avec le flacon rempli d'eau clarifiée et avec le flacon rempli d'eau chargée de boue, la tige adopte une position intermédiaire entre le haut et le bas de la bobine.

La masse du lest 92 est prévue à cet effet, les longueurs de la bobine 60 et de la tige 64 étant calculées de telle sorte que l'on puisse peser aussi bien de l'eau fortement chargée de boue que de l'eau faiblement chargée de boue.

L'intérêt d'utiliser le polyméthacrylate de méthyle pour réaliser le flacon réside dans le fait que ce matériau se sature rapidement en eau et qu'en conséquence le poids du flacon est constant dans les deux phases de mesure du poids apparent (flacon rempli d'eau chargée de boue et flacon rempli d'eau clarifiée).

Ce flacon peut être également en verre qui, au contraire, n'absorbe pas l'eau lorsqu'il y est plongé, le poids du flacon restant également constant dans ce cas.

La mesure des quantités P et V nécessite le remplissage de l'éprouvette en eau clarifiée et en eau chargée de boue et la vidange de cette éprouvette, ainsi que le remplissage du réservoir en eau clarifiée et la vidange dudit réservoir, et également le remplissage du flacon en eau clarifiée et en eau chargée de boue ainsi que la vidange dudit flacon. Ces divers remplissages et vidanges sont réalisés à l'aide de deux circuits indépendants de pompes et d'électrovannes, appelés "circuit d'eau clarifiée" et "circuit des boues". La source d'eau clarifiée est constituée par le clarificateur CL de la station d'épuration et la source d'eau chargée de boue est constituée par l'aérateur AE de cette station.

Le circuit d'eau clarifiée est le suivant : l'eau est pompée dans le clarificateur par une pompe P1 qui est reliée à une voie d'une électrovanne à trois voies V31 dont une seconde voie est reliée au réservoir 24, par l'intermédiaire d'une canalisation débouchant dans ce réservoir, en-dessous de la position haute de la nacelle, et dont la troisième voie est reliée à l'une des voies d'une électrovannes à trois voies V32. Une canalisation relie une seconde voie de cette électrovanne V32 à l'une des voies d'un distributeur à quatre voies 112 qui surmonte le support de bobine 62 et dont une seconde voie est reliée au tube 68. La troisième voie de l'électrovanne V32 est reliée à une voie d'une électrovanne V33 dont une seconde voie communique avec le clarificateur par l'intermédiaire d'une canalisation tandis que sa troisième voie communique avec le conduit 40 de l'éprouvette.

La pompe P1 est par exemple une pompe à membrane ASTI 220V PC150. Les électrovannes V31, V32 et V33 sont par exemple des électrovannes BURKET type 121 Fonction F 3 voies. On a donc les états possibles suivants pour le circuit d'eau clarifiée et pour chaque état, l'ouverture ou la fermeture des voies des électrovannes est déterminée en conséquence:

-attente : de CL vers P1 vers V31 vers V32 vers V33 vers CL

-remplissage du réservoir : de CL vers P1 vers V31 vers le réservoir

-remplissage du flacon : de CL vers P1 vers V31 vers V32 vers distributeur

-remplissage de l'éprouvette : de CL.vers P1 vers V31 vers V32 vers V33 vers éprouvette.

Les vidanges du flacon, du réservoir et de l'éprouvette se font par le circuit des boues que l'on va maintenant décrire:

L'eau chargée de boue est pompée dans l'aérateur AE par une pompe référencée PCM. Une canalisation part de l'aérateur et aboutit à une voie d'une électrovanne à deux voies V26. La seconde voie de cette électrovanne est reliée à une voie d'une électrovanne à deux voies V21. La seconde voie de cette électrovanne V21 est reliée au réservoir 24 dans lequel elle débouche par le fond de celui-ci.

Sur la canalisation reliant les électrovannes V26 et V21, et à partir de l'électrovanne V26, on trouve successivement:

-une première dérivation aboutissant à une voie d'une électrovanne à deux voies V22 dont la seconde voie aboutit à une troisième voie du distributeur 112,

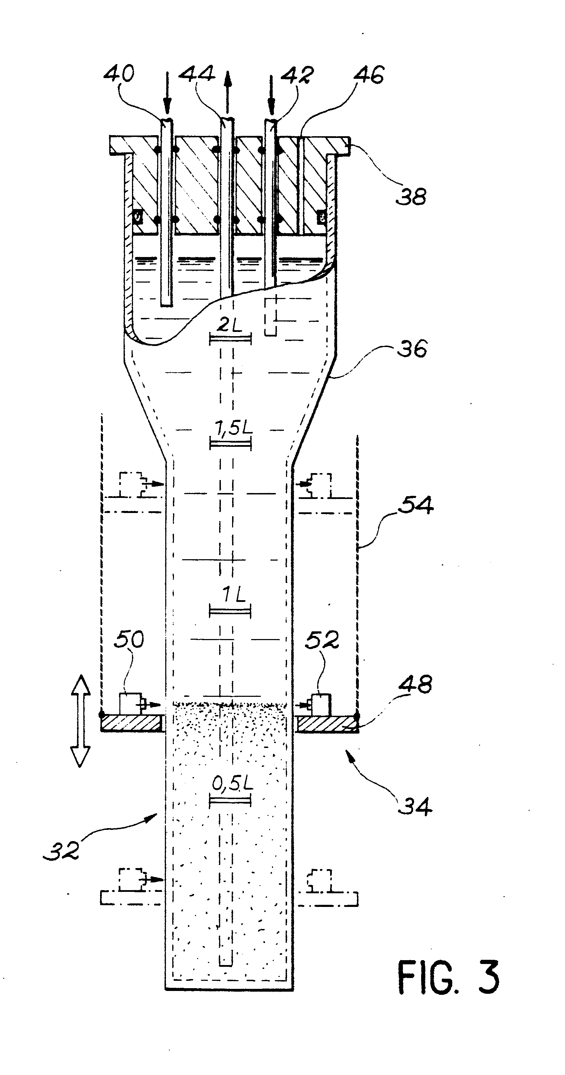

-une seconde dérivation aboutissant à une voie d'une électrovanne à deux voies V24 dont la seconde voie est reliée au conduit 44 (figure 3), et

-une troisième dérivation aboutissant à l'entrée de la pompe PCM.

La sortie de la pompe PCM est reliée à une voie d'une électrovanne à deux voies V27 dont la seconde voie est reliée à l'aérateur. Sur la canalisation reliant la pompe PCM à l'électrovanne V27, et à partir de la pompe PCM, on trouve successivement :

-une première dérivation aboutissant à une voie d'une électrovanne à deux voies V25 dont la seconde voie est reliée au conduit 42 (figure 5), et

-une seconde dérivation aboutissant à une voie d'une électrovanne à deux voies V23 dont la seconde voie est reliée à la quatrième voie du distributeur 112.

La mesure du volume tassé dans l'éprouvette 32 exigeant un dosage précis de la quantité d'eau chargée de boue versée dans cette éprouvette, la pompe PCM est choisie, d'une part, de façon à supporter la viscosité des boues, et d'autre part, de façon à assurer un débit constant. On peut par exemple utiliser à cet effet une pompe commercialement disponible sous le référence PCM MOINEAU 03I10. Cette pompe PCM est commandée par un variateur de vitesse permettant de corriger les variations de débit.

L'électrovanne V21 est par exemple une électrovanne BURKERT fonction A (normalement fermée). Les électrovannes V22, V23, V24, V25, V26, et V27 sont par exemple, compte tenu de la viscosité des boues, des vannes pneumatiques JOUCOMATIC de la série 212-213 avec des pilotes électriques qui sont normalement ouverts, pour les électrovannes V26 et V27, ou normalement fermés, pour les électrovannes V22, V23, V24 et V25.

Pour le circuit des boues, on a alors les divers états suivants et pour chaque état, l'ouverture ou la fermeture des électrovannes est déterminée en conséquence :

-attente : de AE vers V26 vers PCM vers V27 vers AE

-remplissage du flacon : AE vers V26 vers PCM vers V23 vers distributeur

-remplissage de l'éprouvette : AE vers V26 vers PCM vers V25 vers éprouvette

-vidange de l'éprouvette : de l'éprouvette vers V24 vers PCM vers V27 vers AE

-vidange du flacon : du distributeur vers V22 vers PCM vers V27 vers AE

-vidange du réservoir : du réservoir vers V21 vers PCM vers V27 vers AE.

Pour se prémunir contre le gel, on a prévu un ensemble d'évents par électrovannes E1, E2, E3, E4 et E5, qui permettent de "vider" les circuits extérieurs lors de l'arrêt du système automatique de mesure selon l'invention. L'électrovanne E1 est montée en dérivation sur la canalisation reliant la pompe P1 au clarificateur. L'électrovanne E2 est montée en dérivation sur la canalisation reliant l'électrovanne V33 au clarificateur. L'électrovanne E3 est montée en dérivation sur la canalisation reliant l'électrovanne V24 au conduit 44. L'électrovanne E4 est montée en dérivation sur la canalisation reliant l'électrovanne V27 à l'aérateur. Enfin, l'électrovanne E5 est montée en dérivation sur la canalisation reliant l'électrovanne V26 à cet aérateur.

Les électrovannes E1 et E2 sont par exemple des électrovannes BURKERT type 121 Fonction B. Les électrovannes E3, E4 et E5 sont par exemple des évents BURKERT fonction B normalement ouverts.

Pour réduire les frottements du noyau 64 dans la bobine 60, il convient que le réservoir 24 et la bobine 60 soient les plus verticaux possible. A cet effet, le réservoir est placé sur un support 114 - (figure 4) qui est différent du support non représenté de l'éprouvette 32. Pour ce faire, le fond du réservoir est monté sur une plaque 118 dont l'horizontalité est réglable à l'aide de trois vis traversant respectivement trois trous à 120 pratiqués dans la plaque 118 et filetés au pas de vis, trois encoches étant prévues dans le support 114 pour recevoir les extrémités respectives de ces vis. En outre, le support 114 repose sur le bâti 116 commun aux dispositifs 4 et 6, par l'intermédiaire de pieds en caoutchouc 122, pour neutraliser les vibrations engendrées par les pompes.

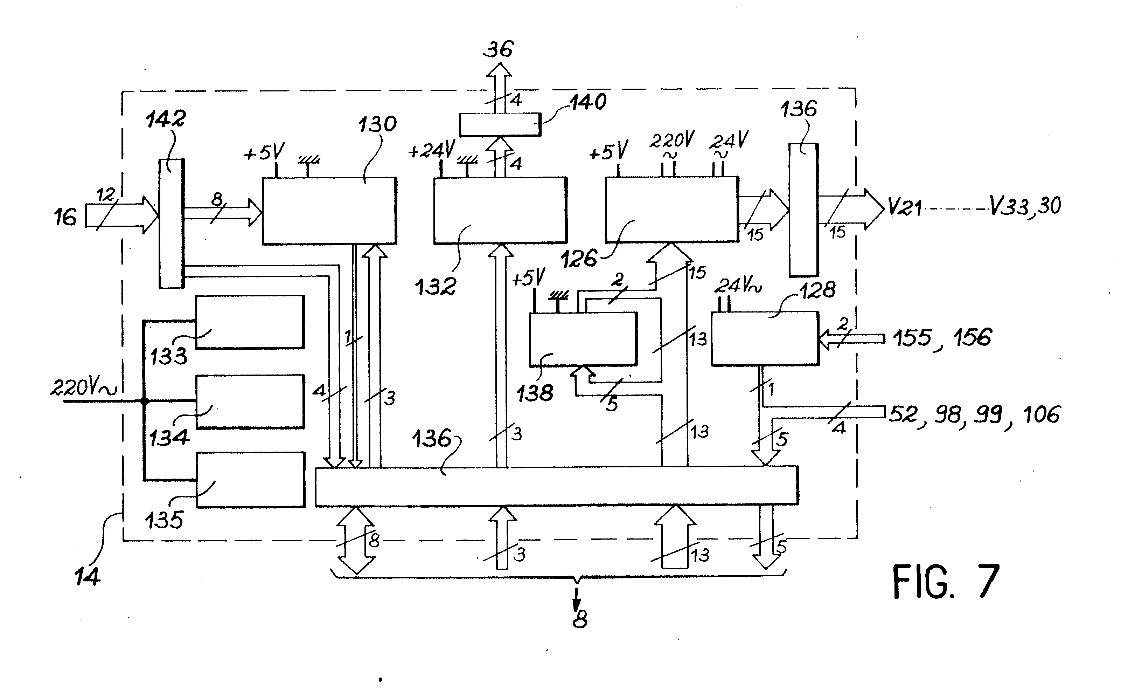

Sur la figure 7, on a représenté - schématiquement l'interface de puissance faisant partie du système de mesure automatique selon l'invention schématiquement représenté sur la figure 1. Cette interface de puissance a pour fonction :

-de transformer les niveaux de tension bas ou haut (dans l'exemple considéré, 0V ou 5V) délivrés par l'ordinateur GOUPIL, en signaux aptes à faire fonctionner des électrovannes ou des moteurs,

-d'acheminer, et éventuellement de rendre compatible avec l'ensemble informatique, les informations provenant de divers capteurs 52, 98, 99 et 106 qui sont utilisés dans le système de mesure selon l'invention et dont il a déjà été question, et

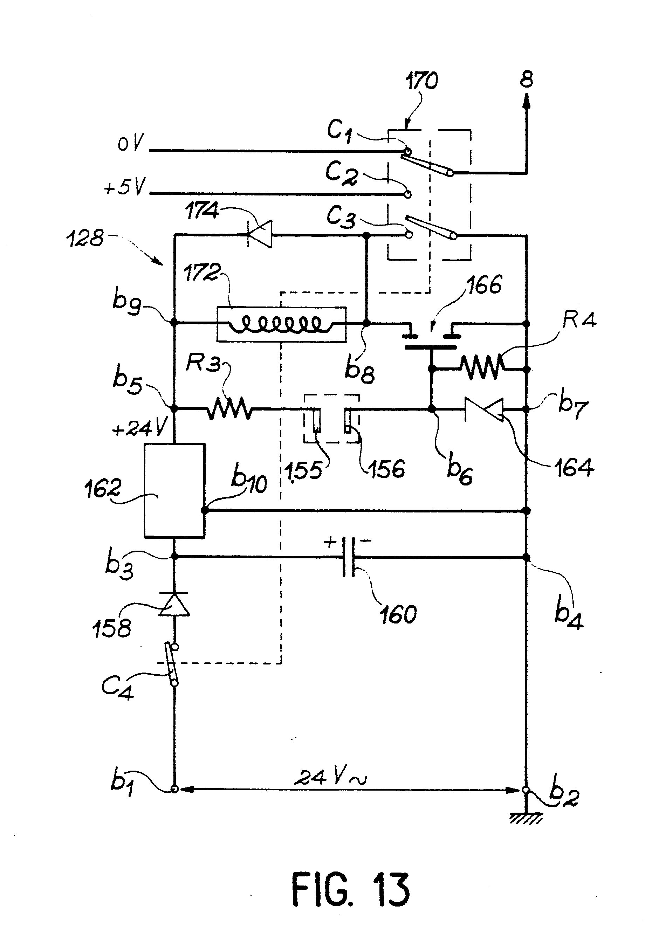

-de rendre exploitables par l'ordinateur GOUPIL, les signaux provenant du selfmètre 16 (figure 13) qui est connecté aux bornes de la bobine 60 en vue d'en mesurer l'inductance.

Comme on le voit sur la figure 7, l'interface de puissance comprend :

-une ensemble 126 de relais destinés à la commande des électrovannes et du moteur 30 de la nacelle,

-un circuit électronique 128 associé à la sonde 66,

- un multiplexeur 130 recevant les signaux provenant du selfmètre 16,

-une carte 132 de commande du moteur pas-à-pas 36 et

des alimentations fournissant les tensions et courants nécessaires au fonctionnement de l'électronique et des éléments électriques de l'armoire, à savoir une alimentation stabilisée de +5V continue 3A référencée 133, une alimentation stabilisée de +24V continue 1A référencée 134 et un transformateur 220V-24V alternatif 120VA référencé 135.

La sortie de l'ensemble 126 des relais est reliée aux électrovannes et au moteur 30 par l'intermédiaire de prises 136. Les signaux de commande des relais en provenance de l'ensemble informatique 8 sont transmis auxdits relais par l'intermédiaire d'un connecteur à 2×25 broches 136.

L'interface de puissance comprend également un circuit logique 138 correspondant aux relais qui commandent les électrovannes V26 et V27. Comme on le voit sur la figure 7, ce circuit 138 est monté en dérivation sur la voie de transmission des signaux de commande des relais en provenance de l'ensemble informatique 8.

Les électrodes 155, 156 de la sonde 66 sont reliées à l'entrée du circuit électronique 128. Les signaux issus des capteurs et du circuit 128 sont transmis à l'ensemble informatique par l'intermédiaire du connecteur 136.

Les signaux de commande de la carte 132 lui sont transmis par l'ensemble informatique, par l'intermédiaire du connecteur 136 et les signaux issus de cette carte 132 sont envoyés au moteur pas-à-pas 36 par l'intermédiaire d'une prise 140.

Comme on le voit sur la figure 7, la sortie du selfmètre 16 est reliée, par l'intermédiaire d'un connecteur 142, à une entrée du multiplexeur 130 et à l'ensemble informatique 8 par l'intermédiaire du connecteur 136, tandis que le multiplexeur 130 reçoit par une autre entrée des signaux de l'ensemble informatique 8 et lui en transmet par une sortie, encore par l'intermédiaire du connecteur 136.

On a noté sur la figure 7 le nombre de lignes des différentes voies de connexion reliant les divers éléments de l'interface entre eux et à divers éléments du système (selfmètre, ensemble informatique ...), dans la réalisation particulière du système que l'on décrit.

Bien entendu, les deux alimentations et le transformateur mentionné plus haut sont alimentés par le secteur 220V alternatif.

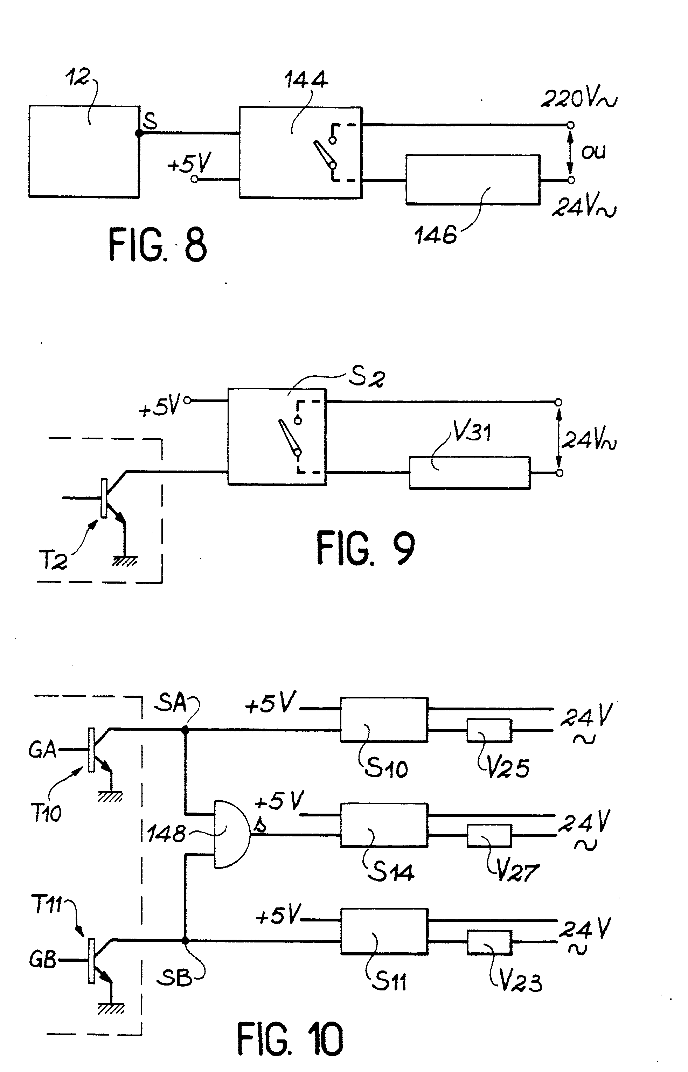

Le principe de la commande des relais est le suivant : les signaux (0 ou 5V) issus de la carte d'entrées-sorties 12 ne peuvent commander directement les électrovannes ou le moteur 30 correspondant à la nacelle. Cette commande est donc réalisée par l'intermédiaire de relais de puissance qui sont capables de commuter des courants importants et des tensions élevées. On peut utiliser des relais optoélectroniques CELDUC dont un exemple est référencé 144 sur la figure 8. Une borne d'entrée. d'un tel relais 144 est reliée à une sortie appropriée S de la carte d'entrées-sorties 12 tandis que l'autre borne d'entrée du relais 144 est portée à une tension constante de +5V. Une borne de sortie du relais 144 est reliée à une borne d'entrée de l'organe 146 correspondant (moteur 30 ou électrovanne) et une tension appropriée de fonctionnement de cet organe (220V alternatif ou 24V alternatif) est appliquée entre l'autre borne de sortie du relais 144 et la borne de sortie dudit organe.

En fait, le moteur 30 étant commandé par deux relais (voir plus bas), il comporte deux bornes d'entrée respectivement associées à deux bornes de sortie et à ces relais.

Lorsque la sortie S est portée à un niveau de tension haut (5V), le relais 144 n'est pas excité et le moteur est à l'arrêt (ou l'électrovanne est au repos). Lorsque la sortie S est à un niveau de tension bas (0V), le relais est excité et le moteur est en marche (ou l'électrovanne est activée).

Plus précisément, on utilise des relais pour commander les éléments suivants :

-le moteur 30 permettant de déplacer la nacelle 28, ce moteur étant alimenté en 220V alternatif et commandé par deux relais (l'un pour la montée de la nacelle et l'autre pour la descente de cette nacelle), et

-Les électrovannes V21, V22, V23, V24, V25, V26, V27, V31, V32 et V33 qui sont alimentées en 24V alternatif.

Ces électrovannes sont commandées chacune par un relais, à l'exception des électrovannes V26 et V27 dont la commande sera expliquée par la suite.

Les autres électrovannes E1, E2, E3, E4 et E5 sont alimentées (en 24V alternatif) dès que le système selon l'invention est sous tension.

Les électrovannes V21, V22, V23, V24, V25, V26, V27,V31, V32 et V33 ont respectivement les fonctions suivantes :

-vidange du réservoir, vidange du flacon, remplissage du flacon en eau chargée de boue, vidange de l'éprouvette, remplissage de l'éprouvette en eau chargée de boue, arrivée de l'eau chargée de boue, évacuation de l'eau chargée de boue, remplissage du réservoir en eau clarifiée, remplissage du flacon en eau clarifiée, et remplissage de l'éprouvette en eau clarifiée.

Les relais utilisés sont des relais statiques CELDUC. Ces relais présentent un très grand isolement entre l'entrée et la sortie (couplage optoélectronique), ont un circuit d'entrée qui accepte une grande variation de la tension de commande (de 3 à 30V) et permet une sortie sur TRIAC avec un courant pouvant aller jusqu'à 8A.

L'ensemble informatique est équipé de deux circuits VIA 6522 comme on le verra par la suite, et dispose donc de 32 entrées-sorties dont le sens - (entrée ou sortie) est déterminé lors de la programmation du système.

Le circuit VIA qui commande les relais est équipé de sorties collecteur ouvert et tous ses ports sont programmés en sortie. Dans le cas de la commande des électrovannes, l'étage d'entrée des relais sert de résistance de charge. Plus précisément, comme on le voit sur la figure 9, la commande de chaque électrovanne, par exemple l'électrovanne V31 (sauf bien entendu les électrovannes E1 à E5 et les électrovannes V26 et V27 dont le cas particulier sera envisagé par la suite) utilise un transistor référencé T2 pour l'électrovanne V31, dans la carte d'entrées-sorties. Il s'agit par exemple d'un transistor NPN dont l'émetteur est mis à la masse et dont le collecteur est relié à une borne d'entrée du relais correspondant référencé S2 pour l'électrovanne V31, tandis que l'autre borne d'entrée de ce relais est portée à une tension de +5V. Une borne de sortie dudit relais est reliée à l'entrée de l'électrovanne V31 et une tension de 24V alternatif est établie entre l'autre borne de sortie de ce relais et la sortie de l'électrovanne V31.

Lorsque la base du transistor T2 est portée à un niveau logique zéro, ce transistor est bloqué, le relais est au repos et l'électrovanne V31 ne fonctionne pas.

Lorsque la base du transistor T2 est portée à un niveau logique 1, ce transistor est saturé, le relais est excité et l'électrovanne fonctionne.

En ce qui concerne le moteur 30 permettant les déplacements de la nacelle 28, pour chacun des relais associés à ce moteur, une résistance de charge appropriée (non représentée) est montée entre le collecteur du transistor et la borne d'entrée du relais correspondant. Lorsque la base du transistor est portée au niveau logique zéro, une tension de 5V est appliquée à la carte de commande du moteur (logique négative).

En ce qui concerne la commande des électrovannes V26 et V27, l'électrovanne V27 doit être fermée par l'ouverture de l'électrovanne V25 ou de l'électrovanne V23 (au repos, V25 et V23 sont fermées et V27 est ouverte).

La présence de collecteurs ouverts impose une logique négative et la fonction OU (ouverture de V25 ou de V23) est réalisée au moyen d'un circuit logique ET suivant le schéma de la figure 10.

L'électrovanne V25 est associée au relais S10 et au transistor T10 dont la base est référencée GA, tandis que l'électrovanne V23 est associée au relais S11 et au transistor T11 dont la base est référencée GB, comme on l'a expliqué pour l'électrovanne V31 dans la description de la figure 9. Les entrées SA et SB d'une porte ET référencée 148 sont respectivement reliées aux collecteurs des transistors T10 et T11. La sortie s de cette porte ET est reliée à une borne d'entrée d'un relais S14 associé à l'électrovan ne V27, tandis que l'autre borne d'entrée de ce relais est portée à une tension de +5V. Une borne de sortie du relais S14 est reliée à l'entrée de l'électrovanne V27 et une tension de 24V alternatif est appliquée entre l'autre borne de sortie du relais S14 et la sortie de l'électrovanne V27.

On notera que SA est portée au niveau logique 0 (respectivement 1) lorsque GA est portée au niveau logique 1 (respectivement 0) et que SB est portée au niveau logique 0 (respectivement 1) lorsque GB est portée au niveau logique 1 (respectivement 0). On peut alors dresser le tableau I suivant, qui donne le niveau logique de la sortie s en fonction des niveaux logiques de GA et GB. Ce tableau montre bien que la fonction souhaitée est obtenue.

## TABLEAU I

| GA | V25 | GB | V23 | s | V27 |
|----|-----|----|-----|---|-----|
| 0 | fermée | 0 | fermée | 1 | ouverte |
| 0 | fermée | 1 | ouverte | 0 | fermée |
| 1 | ouverte | 0 | fermée | 0 | fermée |
| 1 | ouverte | 1 | ouverte | 0 | fermée |

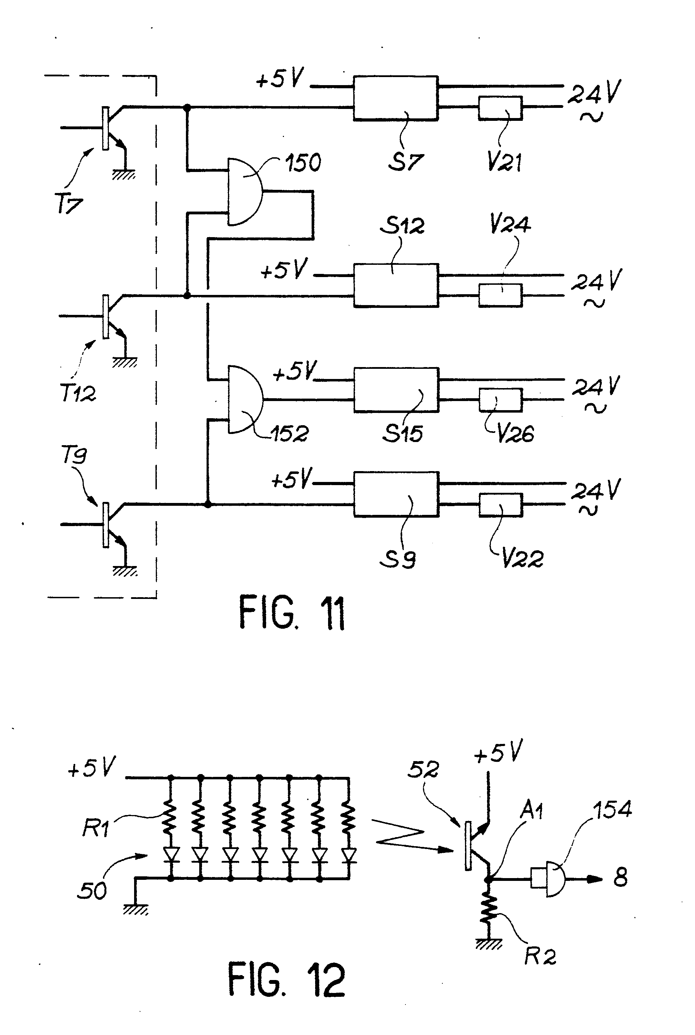

La commande de l'électrovanne V26, qui obéit aux mêmes principes, est réalisée comme on la indiqué sur le schéma de la figure 11 (voir les indications données plus haut sur les états du circuit des boues). L'électrovanne V21 (respectivement V22 ou V24) est associée au relais S7 (respectivement S9 ou S12) et au transistor T7 (respectivement T9 et T12), comme on l'a expliqué à propos de l'électrovanne V31 dans la description de la figure 9. On utilise dans ce cas deux portes ET référencées 150 et 152. Les entrées de la porte ET 150 sont respectivement reliées aux collecteurs des transistors T7 et T12. Une entrée de la porte ET 152 est reliée à la sortie de la porte ET 150 tandis que l'autre entrée de la porte ET 152 est reliée au collecteur du transistor T9. La sortie de la porte ET 152 est reliée à une borne d'entrée du relais S15 correspondant à l'électrovanne V26 tandis que l'autre borne d'entrée du relais S15 est portée à la tension +5V. Une borne de sortie du relais S15 est reliée à l'entrée de l'électrovanne V26 et une tension de 24V alternatif est appliquée entre l'autre borne de sortie du relais S15 et la sortie de l'électrovanne V26.

Pour réaliser les portes ET 148, 150 et 152 on peut utiliser un circuit 74 LS 08 (quadruple ET) qui est un circuit intégré TTL nécessitant une tension d'alimentation de +5V.

Les signaux provenant des circuits VIA sont disponibles sur le connecteur 136 (figure 7) à 2×25 broches.

Les capteurs utilisés dans l'invention permettent de renvoyer vers l'ensemble informatique les informations sur l'état du système. Certaines de ces informations sont directement exploitables -

(signaux 0V ou +5V), mais d'autres doivent être adaptées grâce à un circuit électronique approprié. Les capteurs utilisés sont les suivants :

-le pressostat 106 qui a pour fonction de détecter la fin du remplissage du réservoir, qui fournit une indication de 0 ou 5V et qui est directement relié à l'ensemble informatique (par l'intermédiaire du connecteur 136 bien entendu),

-le microcontact permettant de détecter la position basse de la nacelle, qui fournit une indication 0 ou 5V et qui est lui aussi directement relié à l'ensemble informatique,

-le microcontact permettant de détecter la position haute de la nacelle qui fournit également une indication 0 ou 5V et qui est également relié directement à l'ensemble informatique, et

-le phototransistor 52 qui permet la détection de la séparation boue-eau dans la mesure du volume, qui fournit une indication 0 ou 5V et qui est relié par l'intermédiaire d'un circuit tampon (porte ET) à l'ensemble informatique.

On peut également considérer en tant que capteur, les électrodes de la sonde 66 qui indiquent la fin du remplissage du flacon, qui fournissent une différence de résistance électrique et sont reliées à l'ensemble informatique par l'intermédiaire du circuit 128 (la différence de résistance correspondant à une différence de niveau de tension, 0 ou 5V).

On n'utilise aucun capteur de remplissage ou de vidange de l'éprouvette car les temps de remplissage et de vidange de celle-ci sont programmés. De même, aucun capteur pour détecter l'atteinte, par la tablette, de sa position basse, n'est prévu, le temps de descente de la tablette étant également programmé.

Le fonctionnement du pressostat (capteur de niveau du réservoir) et des microcontacts (capteurs des niveaux haut et bas de la nacelle) a déjà été expliqué dans la description de la figure 2.

Le capteur de détection du volume de décantation est schématiquement représenté sur la figure 12. Les photodiodes 50 mentionnées dans la description de la figure 3 sont par exemple au nombre de sept et du type TIL 32 (photodiodes émettant un rayonnement infrarouge). Pour chacune des photodiodes, l'anode est reliée à une extrémité d'une résistance R1, chacune des autres extrémités des résistances R1 étant portée à une tension de +5V, tandis que les cathodes des diodes 50a sont toutes mises à la masse. Chaque résis tance R1 vaut par exemple 100 ohms.

Le phototransistor également mentionné dans la description de la figure 3 est par exemple un phototransistor TIL 78. L'émetteur de ce phototransistor est porté à une tension +5V et le collecteur dudit transistor est relié à une extrémité A1 d'une résistance R2 dont l'autre extrémité est mise à la masse. Le capteur représenté sur la figure 12 comprend également une porte ET référencée 154 dont les deux entrées sont reliées à l'extrémité A1 et la sortie à l'ensemble informatique 8. La porte ET est par exemple la porte restante du circuit 74 LS 08 mentionné plus haut. La résistance R2 vaut par exemple 3,6 kilo-ohms.

Lorsque le transistor est excité, le point A1, compte tenu de l'émission lumineuse des diodes et compte tenu de la résistance R2 choisie, est porté à une tension voisine de +5V. Lorsque le transistor n'est plus soumis au rayonnement infrarouge des diodes, le point A1 est porté à une tension voisine de 0V. La porte ET 154 joue un rôle de tampon entre le phototransistor 52 et l'entrée du circuit VIA correspondant.

La sonde de détection du niveau du flacon permet de détecter le moment précis où le flacon est rempli lors de sa phase de remplissage. En effet, le flacon doit être rempli avec précision, car si les électrovannes sont fermées trop tôt, le flacon ne sera que partiellement rempli et lors de la descente de la nacelle, il ne s'immergera pas car trop léger. A l'inverse, en ce qui concerne le remplissage en eau chargée de boue, si les électrovannes se ferment trop tard, il y aura débordement des boues qui iront dans le réservoir et entraîneront des erreurs de mesure.

Pour résoudre ce problème de remplissage, on utilise la sonde 66 munie des deux électrodes 155 et 156 (figure 4) qui utilisent le principe de la variation de la résistance entre deux électrodes par exemple en argent, lorsque celles-ci sont soit dans l'air soit plongées dans un liquide tel que l'eau clarifiée ou chargée de boue. La position de la sonde doit être réglée avec précision, car si elle est placée trop bas, le flacon plein, en remontant, noie les électrodes entres lesquelles se forme un pont d'eau provoquant l'envoi vers l'ensemble informatique de l'information "flacon plein" même lorsque ce flacon a été vidé, et par conséquent, l'arrêt du programme. Si la sonde est placée trop haut, elle ne détecte plus rien.

Le circuit électronique 128 (figure 7) associé à la sonde 66 est schématiquement représenté sur la figure 13. Ce circuit sert à convertir une différence entre deux valeurs de résistance électrique en une différence de niveau 0V ou +5V.

Le circuit de la sonde possède deux bornes d'entrée $b_1$ et $b_2$ entre lesquelles est appliquée une tension alternative de 24V, la borne $b_2$ étant mise à la masse. Ce circuit comprend tout d'abord des moyens aptes à fournir une tension continue stabilisée de 24V. Ces moyens comprennent une diode de redressement 158 dont l'anode peut être reliée à la borne $b_1$ par l'intermédiaire d'un contact $c_4$ d'un relais 170 dont il sera question par la suite. La cathode de la diode 158 est reliée à l'entrée $b_3$ d'un régulateur 162. Un condensateur de filtrage 160 est relié par une extrémité à l'entrée $b_3$ et par son autre extrémité à un point $b_4$ lui-même relié à la borne $b_2$ et à une autre entrée $b_{10}$ du régulateur, prévue pour donner le niveau 0V au régulateur.

Une résistance électrique $R_3$ est reliée par une extrémité à la sortie $b_5$ du régulateur 162 et par son autre extrémité à l'électrode 155. Une diode ZENER 164 est reliée par sa cathode à un point $b_6$ lui-même relié à l'autre électrode 156, et par son anode à un point $b_7$ lui-même relié au point $b_4$. Une résistance électrique R4 est reliée par une extrémité au point $b_6$ et par son autre extrémité au point $b_7$.

Le circuit représenté sur la figure 13 comprend également un transistor VMOS référencé 166, dont la grille est reliée au point $b_6$ tandis que sa source est reliée au point $b_7$.

Le circuit de la figure 13 comprend aussi un relais 170 dont la sortie est reliée à l'ensemble informatique par l'intermédiaire du connecteur 136 et qui comporte un premier contact $c_1$ qui, lorsqu'il est activé, porte la sortie du relais au niveau de tension 0V, ainsi qu'un second contact $c_2$ qui, lorsqu'il est activé, porte cette sortie au niveau de tension +5V. Le relais 170 comporte également un électro-aimant 172 pourvu d'une bobine dont une extrémité est reliée à un point $b_8$ lui-même relié au drain du transistor 166 et dont l'autre extrémité est reliée à un point $b_9$ lui-même relié au point $b_5$.

Enfin, une diode de protection 174 est reliée par son anode à une borne d'un troisième contact $c_3$ du relais, et par sa cathode au point $b_9$. L'anode de la diode 174 est également reliée au point $b_8$. Sur la figure 13, les pointillés indiquent que l'electro-aimant 172 commande les contacts $c_1$, $c_2$, $c_3$ $c_4$ ensemble.

A titre purement indicatif et nullement limitatif, la diode 158 est une diode 1N 4004, le condensateur 160 a une valeur de 900$\mu$F, la résistance R3 a une valeur de 1,5 kilo-ohms, la diode ZENER est une diode DZ 10V, la résistance R4 a une valeur de 100 kilo-ohms, le relais 170 est un relais 4RT 24V et la diode 174 est une diode 1N 4004.

La tension alternative de 24V, après redressement et filtrage, donne, à la sortie du régulateur, une tension continue stabilisée de 24V. Lorsque les électrodes sont dans l'air, aucun courant ne peut passer dans la résistance R3 et le transistor VMOS, dont la grille est au potentiel 0 par l'intermédiaire de la résistance R4, ne conduit pas : le relais est au repos et sa sortie est portée au niveau logique 0 qui est ainsi transmis à l'ensemble informatique.

Lorsque les électrodes plongent dans un liquide, elles présentent entre elles une résistance électrique faible qui permet le passage d'un courant qui va alors polariser la diode ZENER. La grille du transistor VMOS est alors portée à un potentiel de 10V qui rend ce transistor conducteur, assurant ainsi l'activation du contact $c_2$ du relais qui envoie alors un niveau logique 1 vers l'ensemble informatique.

Le contact supplémentaire $c_3$, dont l'autre borne est reliée au point $b_7$, assure l'auto-maintien du relais afin d'éviter les vibrations intempestives et l'autre contact supplémentaire $c_4$ du relais 170 permet de couper ce relais au bout d'un temps de l'ordre de 2 secondes après son excitation par l'intermédiaire du condensateur 160 qui se décharge dans le circuit. Si au bout de ces deux secondes, les électrodes sont toujours plongées dans le liquide, le contact $c_2$ se ferme à nouveau et ainsi de suite jusqu'à ce que les électrodes soient hors du liquide. Dès que le liquide du flacon atteint les électrodes, le contact $c_4$ est ouvert, le condensateur 160 se décharge pendant 2 secondes et assure l'auto-maintien des contacts $c_2$ et $c_3$ pendant ce temps.

La diode 174, qui est montée en parallèle sur la bobine du relais, est rendue passante lorsque cette bobine se décharge, et protège donc le transistor VMOS du courant de rupture engendré par l'inductance de cette bobine.

Sur la figure 14, on a représenté schématiquement le selfmètre 16 permettant de mesurer l'inductance de la bobine 60. Ce selfmètre est par exemple du genre de celui qui est commercialisé par la Société Française d'Instrumentation sous la référence SAP 1, qui est muni de sorties BCD (binaire codé décimal) parallèles. On a adopté le principe de la mesure dite "à 4 fils" qui évite d'avoir une mesure faussée par la présence d'inductances parasites dues aux fils de connection - (cas de la mesure dite "à 2 fils") : le selfmètre, muni d'un générateur de courant constant 176, applique aux bornes de la bobine 60 un courant sinusoïdal d'amplitude constante (10$\mu$A) à une fréquence de 1KHz, et mesure à ces mêmes bornes la tension obtenue (2,7V maximum), grâce à un voltmètre 178. Cette tension variant avec la valeur de l'inductance de la bobine, on obtient, après étalonnage, la valeur de cette inductance en millihenrys.

Le codage de la mesure effectuée à l'aide du selfmètre va maintenant être expliquée : cette mesure est faite sur 4 chiffres (unités, dizaines, centaines, milliers). Chaque chiffre décimal (0 à 9) est codé sur 4 bits (ou éléments binaires) BCD1, BCD2, BCD3 et BCD4, BCD1 représentant le bit de poids le plus faible et BCD4 celui de poids le plus fort.

Le principe des sorties parallèles est le suivant : le selfmètre est muni d'une horloge KHz. A la sortie du selfmètre, on a 4 bits BCD1 à BCD4 et 4 bits indiquant quel chiffre est valide sur BCD1 à BCD4 (chiffre des unités, des dizaines, des centaines, des milliers). Pendant huit coups d'horloge, un chiffre est envoyé sur BCD1 à BCD4, puis pendant les huit coups d'horloge suivants, le chiffre supérieur est envoyé. Lorsque le chiffre des milliers a été envoyé, c'est le chiffre des unités qui est inscrit sur BCD1 à BCD4. Ceci a été représenté sur le chronogramme de la figure 15, en prenant l'exemple d'une mesure d'une valeur de $1294.10^{-2}$mH.

En outre, le selfmètre possède trois sorties binaires indiquant la gamme sur laquelle est effectuée la mesure (microhenrys, milli-henrys, henrys). On a donc onze sorties mais leur nombre a été réduit à l'aide du multiplexeur 130 (figure 7). De préférence à un multiplexeur analogique tel que le multiplexeur 7503 AD, qui nécessite une alimentation symétrique en + et -15V, on utilise un multiplexeur numérique TTL de la série 74 LS 151, à 8 entrées et 1 sortie. Ce multiplexeur présente l'avantage de n'avoir besoin que d'une tension unique de +5V (tension utilisée par ailleurs et donc déjà disponible dans le système de l'invention) et l'alimentation symétrique en + et -15V n'est pas nécessaire.

Le moteur pas-à-pas 36 (figure 2) est par exemple un moteur commercialisé par la Société CROUZET sous la référence 82 940 0, qui est alimenté par une carte de commande électronique tension constante (24V) également commercialisée par la société CROUZET sous la référence 84 854-6. Cette carte reçoit de l'ensemble informatique les ordres de commande suivants :

-alimentation des phases du moteur,

-sens de rotation,

-impulsion de commande.

L'alimentation 133 est utilisées pour les circuits intégrés TTL, l'étage de commande des relais et certains capteurs, l'alimentation 134 pour la carte de commande du moteur pas-à-pas, et le transformateur 135 pour l'alimentation du circuit de la sonde et les relais.

La carte d'entrées-sorties utilisée dans l'exemple de réalisation décrit en référence aux figures précédentes est la carte ESNOG 2020 commercialisée par la société NOGEMA Informatique. Cette carte contrôle 32 entrées-sorties parallèles. Elle est équipée de deux circuits VIA 6522 qui occupent chacun 16 adresses soit 32 adresses pour une carte. Les informations concernant les circuits VIA 6522 sont données dans la documentation GOUPIL, tome I ou tome IV.

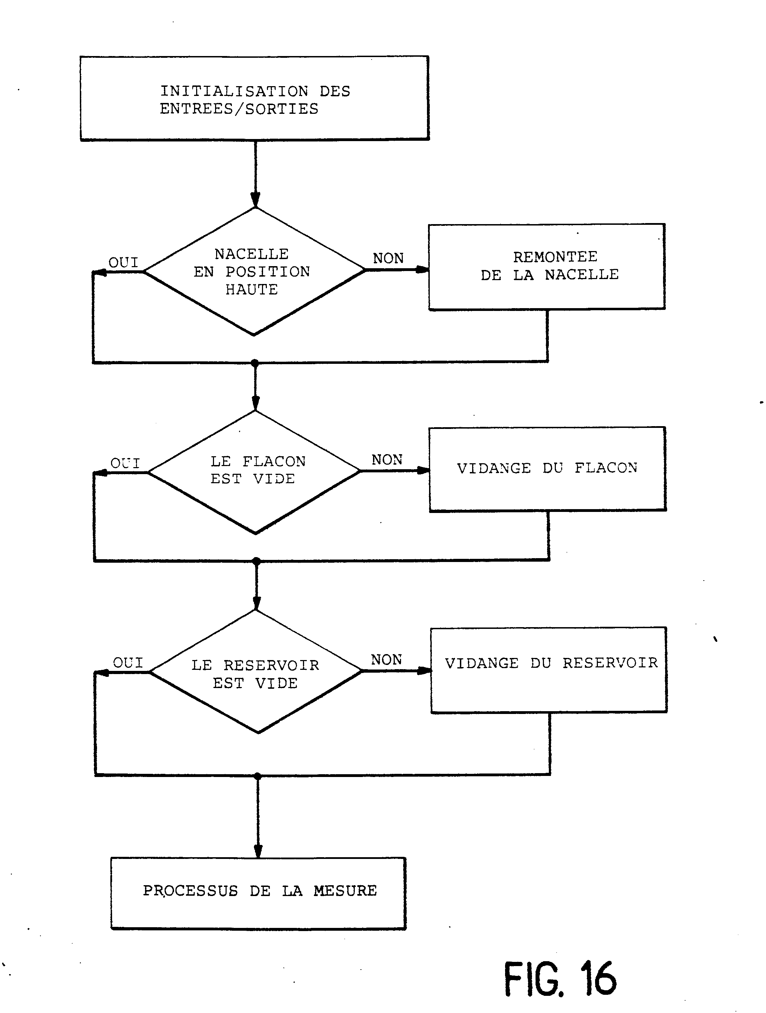

Sur la figure 16, on a représenté l'organigramme général du programme de gestion du système de mesure automatique de l'indice de PONSAR, objet de l'invention. L'étape 1 de ce programme comprend une initialisation des entrées-sorties de l'ensemble informatique suivie d'un contrôle de l'état de l'ensemble 2 constitué par le dispositif de mesure du volume et le dispositif de mesure du poids apparent.

En effet, lors de la mise en route de l'ordinateur, il faut initialiser les entrées-sorties de celui-ci avant d'alimenter cet ensemble 2. L'initialisation a pour but de mettre tous les éléments du système en position d'attente (non fonctionnement) en initialisant convenablement chaque registre de données (par où transitent les données aussi bien en sortie qu'en entrée) et chaque registre de direction (qui configure chaque port du circuit VIA correspondant en entrée ou en sortie) associé à ce registre de données, pour chacun des circuits VIA.

Le contrôle de l'état de l'ensemble 2 est effectué en contrôlant d'abord si la nacelle est en position haute. Si c'est le cas, on contrôle si le flacon est vide. Si la nacelle n'est pas en position haute, on la remonte dans cette position haute et l'on se branche l'étape de contrôle de l'état vide du flacon. Si celui-ci est vide, on contrôle ensuite si le réservoir est lui-même vide. Si le flacon n'est pas vide, on effectue sa vidange et l'on se branche à l'étape de contrôle de l'état vide du réservoir. Si le réservoir est vide, les phases successives suivantes que comprend le programme de gestion et que l'on va indiquer dans la suite sont effectuées. Si le réservoir n'est pas vide, la vidange de ce réservoir est faite et l'on effectue ensuite lesdites phases suivantes, numérotées de 2 à 31, que l'on indique maintenant :

2 -Remplissage du flacon en eau chargée de boue.

3 -Vidange du flacon (élimination des boues ayant séjourné dans le conduit d'arrivée).

4 -Remplissage du flacon en eau chargée de boue.

5 -Remplissage du réservoir en eau clarifiée.

6 -Remplissage de l'éprouvette en eau clarifiée (1,5l).

7 -Remplissage de l'éprouvette en eau chargée de boue (1l).

8 -Descente de la nacelle à quelques centimètres sous la surface de l'eau clarifiée du réservoir (le flacon restant à fleur d'eau).

9 -Attente de 8 mn (pour la décantation des boues et l'imprégnation du flacon en eau).

10 -Légère remontée de la nacelle - (provoquant une aspiration du flacon sous l'eau).

11 -Descente de la nacelle en position basse.

12 -Attente de 10 mn (pour la stabilisation du flacon).

13 -Prise des mesures de l'inductance de la bobine (20 mesures).

14 -Traitement mathématique de ces mesures, affichage du résultat.

15 -Remontée de la nacelle.

16 -Vidange et ringage du flacon.

17 -Remplissage du flacon en eau clarifiée.

18 -Descente de la nacelle à quelques centimètres sous le niveau de l'eau clarifiée du réservoir puis légère remontée de la nacelle afin de faire plonger le flacon.

19 -Descente de la nacelle en position basse.

20 -Attente de 4 mn (pour la stabilisation du flacon).

21 -Prise des mesures de l'inductance de la bobine (20 mesures).

22 -Traitement mathématique de ces mesures, affichage du résultat.

23 -Calcul du poids apparent des boues, affichage du résultat.

24 -Remontée de la nacelle.

25 -Vidange du flacon.

26 -Lecture du volume de décantation - (montée de la tablette grâce au moteur pas à pas).

27 - Remise en place de la tablette.

28 -Affichage du volume de décantation et de l'indice de PONSAR.

29 -Vidange et rinçage de l'éprouvette.

30 -Vidange du réservoir.

31 -Arrêt du programme.

On notera que, lors du contrôle de l'état de l'ensemble 2, l'on ne vérifie pas que l'éprouvette est vide mais on le suppose car la durée programmée pour la vidange de l'éprouvette est supérieure à la durée nécessaire à cette vidange.

Un sous-programme permet de chronométrer les temps d'attente (par exemple par calcul d'une expression telle que sin(45°) dont la durée de calcul est connue).

En outre, la gestion du processus de mesure demande un contrôle des capteurs par l'intermédiaire des ports d'entrées-sorties. Le contrôle des capteurs est géré par un unique sous-programme. Les phases du programme de gestion utilisant ce sous-programme sont les phases 2, 4, 5, 11, 15, 17, 19, 24. Le sous-programme considéré contrôle l'état du capteur intervenant dans la phase du processus. Si ce capteur est au niveau logique 0, l'ordinateur contrôle à nouveau l'état dudit capteur jusqu'à ce qu'il repasse au niveau logique 1. A ce moment, l'ordre est donné d'interrompre la phase. Si au bout d'un nombre déterminé de tests, l'état du capteur n'est pas égal à 1, l'ordinateur décide qu'il y a un fonctionnement anormal de l'ensemble 2 et que celui-ci est mis en défaut ; le processus est interrompu et le sous-programme considéré engendre alors un code d'erreur correspondant au capteur considéré.

Plus précisément, le traitement des erreurs est effectué au moyen de deux sous-programmes du programme de gestion et consiste, suivant les cas soit à vérifier que la configuration des entrées-sorties est conforme à celle qui est requise avant le lancement d'une nouvelle phase, soit à détecter le non-fonctionnement d'un capteur, par exemple la sonde, au bout d'un temps assez long déterminé à l'avance. On peut également prévoir un programme de vérification des capteurs et des organes de commande, un par un. Ce programme permet par exemple, lors d'une opération de maintenance, de vérifier un par un ces capteurs et ces organes en cas de panne.

Le programme de gestion utilisé permet d'avoir une bonne coïncidence entre la mesure automatique réalisée et une mesure manuelle de l'indice de PONSAR. En effet, le remplissage du flacon en eau chargée de boue est fait avant celui du réservoir et de l'éprouvette pour parvenir à un taux de décantation des boues dans le flacon de 30 minutes conformément à ce qui se passe lors d'une mesure manuelle ; la durée de stabilisation du flacon dans l'eau du réservoir lors de la mesure du poids des boues a également été choisie à cet effet ; et l'éprouvette est remplie de 1,5l d'eau clarifiée.

On notera également que la mesure du poids de boue (flacon rempli d'eau chargée de boue) est faite avant la mesure de la tare (flacon rempli d'eau clarifiée), ce qui permet d'assurer en une seule opération la décantation de la boue et l'imprégnation du flacon en eau.

Le fait de remplir le flacon en eau chargée de boue avant de remplir le réservoir en eau permet de parvenir à disposer d'une durée d'une demi-heure entre les phases 2 et 13 (en accord avec la durée préconisée pour la mesure manuelle).

Par ailleurs, le processus utilisé pour obtenir la plongée du flacon rempli d'eau chargée de boue utilise les remous créés par le mouvement de la nacelle pour aspirer le flacon sous la surface de l'eau (phase 10). En effet, les trous dont est pourvue la nacelle permettent à l'eau de s'écouler lors des mouvements de montée ou de descente de la nacelle. Lorsque celle-ci monte, il se produit un flux d'eau du haut vers le bas. Ce flux peut permettre de faire descendre le flacon. Plus précisément, après la fin du remplissage de l'éprouvette en eau chargée de boue, la nacelle est descendue et immobilisée sous la surface de l'eau. Le flacon ainsi libéré reste à la surface et flotte au ras de l'eau. Une fois le temps de décantation atteint, la nacelle est remontée de quelques centimètres, ce qui induit un courant descendant aspirant le flacon sous la surface de l'eau. La nacelle est ensuite immobilisée quelques instants (de l'ordre de quelques secondes par exemple) pour permettre au flacon de commencer sa descente sans perturbation. La nacelle est ensuite amenée en position basse.

Cette solution d'aspiration hydraulique, adoptée pour faire plonger le flacon, a l'avantage, par rapport à un système mécanique par exemple, d'être mise en oeuvre très facilement par voie de programmation.

Enfin, on indique que les durées qui séparent les phases 2 (remplissage du flacon en eau chargée de boue) et 13 (mesures d'inductance) et les phases 7 (remplissage de l'éprouvette en eau chargée de boue) et 26 (lecture du volume de décantation) sont toutes deux égales à 30 minutes.

En cas d'avarie de l'ensemble informatique, on peut prévoir des moyens de commande manuelle de l'ensemble 2. A cet effet, on peut notamment utiliser un réservoir transparent pourvu de repères, de manière à pouvoir le remplir avec précision et positionner correctement la nacelle, ainsi qu'une

29      **0 210 916**      30

éprouvette graduée permettant la lecture directe du volume de décantation. Lors d'une mesure manuelle, l'ensemble informatique et l'interface de puissance sont déconnectés.

Par ailleurs, en ce qui concerne la mesure du volume de boue décantée dans l'éprouvette, après que le nombre de pas effectués par le moteur pas-à-pas commandé par l'ordinateur, pour obtenir la limite de décantation, ait été enregistré, le volume de boue décantée est calculé par la formule suivante :

$$V1 = F \times V2 + V0$$

dans laquelle V1 représente le volume de boue décantée, F le nombre de pas et V2 le volume correspondant à chaque pas. La quantité V0 est un volume initial dû au fait que la tablette ne part pas exactement d'une hauteur nulle. Les quantités V0 et V2 peuvent être déterminées lors de l'étalonnage de l'appareil. Dans l'exemple de réalisation considéré, les quantités V0 et V2 sont respectivement prises égales à 96,774 ml et 4,516 ml.

Enfin, en ce qui concerne la prise de mesures par le selfmètre, les valeurs mesurées par ce selfmètre sont mises en mémoire dans l'ordinateur puis traitées. Cependant, certaines mesures peuvent être aberrantes du fait du temps de montée des signaux de sortie du multiplexeur. Pour remédier à cet inconvénient, il suffit d'effectuer un traitement statistique approprié des mesures prises par le selfmètre. Le nombre de mesures (20) indiqué dans les phases 20 et 21 n'est qu'un exemple : ce nombre pourrait évidemment être inférieur ou supérieur à 20.

Ce traitement est effectué de la façon suivante par l'ordinateur : après avoir acquis et mémorisé 20 valeurs de l'inductance (correspondant soit à la quantité L1 soit à la quantité L2 mentionnée plus haut), valeurs qui peuvent être notées M1, M2, ..., M20, la moyenne M et l'écart type de ces valeurs sont calculés. On note s5 la première valeur comprise entre $M -\alpha$ et $M +\alpha$. Toute valeur n'appartenant pas à l'intervalle $M -\alpha$, $M +\alpha$ est remplacée par s5. A la suite de ceci, chaque nombre M1 à M20 se trouve compris entre $M -\alpha$ et $M +\alpha$. On élimine donc ainsi toutes les valeurs aberrantes et l'on peut calculer une nouvelle moyenne qui sera considérée comme la valeur de l'inductance. Connaissant ainsi les deux valeurs L1 et L2 de cette inductance, le programme calcule le poids apparent P d'après la formule donnée plus haut, ou plus exactement d'après la formule :

$$P = 0,41 \ (L2-L1)$$

dans laquelle le coefficient 0,41 a été déterminé lors de l'étalonnage de l'appareil.

Le fait d'enfermer l'ensemble 2 dans une armoire ou plus généralement dans une enceinte opaque à la lumière solaire, empêche une suractivation des boues en cours de mesure ainsi que l'atteinte du phototransistor 52 par la lumière, ce qui fausserait les mesures.

## Revendications

1. Appareil de mesure du poids apparent d'une boue chargeant un liquide, caractérisé en ce qu'il comprend :

-un récipient (24),

-des moyens de remplissage (P1, V31) en liquide clarifié et de vidange (PCM, V21, V27) de ce récipient,

-un flacon (26) apte à flotter dans le récipient, rempli de liquide clarifié, lorsque ce flacon est vide,

-des moyens (28, 30) de déplacement du flacon, prévus pour amener ce flacon dans le liquide clarifié du récipient et l'en retirer,

-des moyens de remplissage en liquide clarifié (P1, V31, V32), de remplissage en liquide chargé de boue (PCM, V23) et de vidange (PCM, V22, V27) du flacon,

-un ensemble de mesure électrique (16, 60, 64), apte à fournir un signal électrique fonction de la position du flacon dans le récipient, et

-un système électronique de traitement (10, 12, 14), prévu pour déterminer le poids apparent d'un volume de liquide chargé de boue, pesé dans le liquide clarifié, à partir de signaux électriques correspondant aux positions, dans le récipient (24) rempli de liquide clarifié, du flacon (26) rempli respectivement de liquide clarifié et de liquide chargé de boue, en commandant de façon appropriée les moyens de remplissage et de vidange et les moyens de déplacement du flacon.

2. Appareil selon la revendication 1, caractérisé en ce que le flacon (26) comprend un flotteur intégré (84) et a une forme externe permettant l'évacuation de bulles d'air lors de l'immersion du flacon dans le liquide clarifié.

16

3. Appareil selon la revendication 2, caractérisé en ce que le flacon (26) a un fond (78) conique et comprend une paroi externe cylindrique (80) et une paroi interne (82) délimitant entre elles un espace - (84) qui est fermé de façon étanche.

4. Appareil selon l'une quelconque des revendications 1 à 3, caractérisé en ce que le flacon - (26) est en un matériau qui, lorsqu'il est plongé dans le liquide clarifié, n'absorbe pas celui-ci ou, au contraire, se sature rapidement en ce liquide clarifié.

5. Appareil selon l'une quelconque des revendications 1 à 4, caractérisé en ce que les moyens de déplacement du flacon comprennent une nacelle (28) apte à soutenir le flacon (26) et percée de trous (90) permettant la circulation du liquide clarifié, et des moyens (30) de déplacement de la nacelle.

6. Appareil selon l'une quelconque des revendications 1 à 5, caractérisé en ce que l'ensemble de mesure électrique comprend une bobine (60) fixe par rapport au récipient (24), une tige métallique (64) rendue solidaire du flacon (26) et apte à constituer un noyau pour la bobine et à coulisser dans celle-ci lorsque le flacon est déplacé dans le récipient (24), modifiant ainsi l'inductance de la bobine, et des moyens (16) de mesure d'une grandeur fonction de cette inductance, aptes à fournir ledit signal électrique.

7. Appareil selon la revendication 6, caractérisé en ce que les moyens (16) de mesure comprennent un selfmètre.

8. Appareil selon l'une quelconque des revendications 1 à 7, caractérisé en ce qu'il comprend en outre une sonde (66) à électrodes (156), prévue pour informer le système électronique de traitement (10, 12, 14) du remplissage du flacon (26).

9. Système de mesure de l'indice de PONSAR d'une boue chargeant un liquide, caractérisé en ce qu'il comprend :

-l'ensemble de mesure du poids apparent selon l'une quelconque des revendications 1 à 8,

-un autre récipient (32),

-des moyens de remplissage en liquide clarifié (P1, V31, V32, V33), de remplissage en liquide chargé de boue (PCM, V25, V26) et de vidange (PCM, V24, V27) de cet autre récipient,

-des moyens de détection électrique, (34, 36) aptes à fournir d'autres signaux électriques, fonctions du niveau de boue décantée dans l'autre récipient - (32) préalablement rempli de liquide clarifié et de liquide chargé de boue,

et en ce que le système électronique de traitement (10, 12, 14) est en outre prévu pour déterminer, à partir de ces autres signaux, le volume de boue décantée dans l'autre récipient (32), correspondant à une quantité prédéterminée de liquide chargé de boue, et pour déterminer également l'indice de PONSAR de la boue, en utilisant ledit poids apparent et ledit volume de boue décantée, en commandant de façon appropriée les moyens de remplissage et de vidange.

10. Système selon la revendication 9, caractérisé en ce que les moyens de détection comprennent un ensemble-détecteur (34) comportant au moins un photo-émetteur (50) et au moins un photo-détecteur (52), rendus solidaires et placés en regard l'un de l'autre, de part et d'autre de l'autre récipient (32), cet autre récipient (32) et le liquide clarifié étant transparents à la lumière que chaque photo-émetteur est capable d'émettre, et des moyens (36) de déplacement de cet ensemble-détecteur, aptes à déplacer celui-ci le long de l'autre récipient, sensiblement à partir du fond de ce dernier, et commandés par le système électronique de traitement, le photo-détecteur étant destiné à informer alors ce système électronique de traitement (10, 12, 14) de la position de la surface de séparation entre la boue décantée et le liquide clarifié dans l'autre récipient.

11. Système selon la revendication 10, caractérisé en ce que les moyens de déplacement de l'ensemble-détecteur comprennent un moteur pas-à-pas (36) et en ce que le système électronique de traitement (10, 12, 14) est prévu pour déterminer le nombre de pas lors du déplacement de l'ensemble-détecteur (34) sensiblement à partir du fond de l'autre récipient (32).

12. Procédé de mesure de l'indice de PONSAR, mis en oeuvre dans le système selon l'une quelconque des revendications 9 à 11, caractérisé en ce qu'il comprend les étapes suivantes :

-remplissage du flacon (26) en liquide chargé de boue,

-remplissage du récipient (24) en liquide clarifié,

-remplissage de l'autre récipient (32) d'une quantité déterminée de liquide clarifié,

-remplissage de cet autre récipient d'une quantité déterminée de liquide chargé de boue,

-plongée du flacon dans le récipient,

-attente d'une durée déterminée, pour l'atteinte par le flacon d'une première position stable dans le récipient,

-prise de mesures par l'ensemble de mesure (16, 60, 64,)

-calcul par le système électronique de traitement - (10, 12, 14), d'une première quantité fonction de la première position,

-remontée du flacon,

-vidange et rinçage de celui-ci,

-remplissage du flacon en liquide clarifié,

-plongée du flacon dans le récipient,

-attente d'une durée déterminée pour l'atteinte par le flacon d'une seconde position stable dans le récipient,

-prise de mesures par l'ensemble de mesure,

-calcul par le système électronique de traitement d'une seconde quantité fonction de la seconde position,

-calcul, par le système électronique de traitement, du poids apparent de la boue, à l'aide de la première et de la seconde quantités,

-détermination, par ce système électronique, du volume de boue décantée dans l'autre récipient, et

-détermination, par ledit système électronique, de l'indice de PONSAR, à partir de ce volume et du poids apparent de boue.

13. Procédé selon la revendication 12, utilisant la nacelle (28) selon la revendication 5, caractérisé en ce que l'étape de plongée du flacon (26) rempli de liquide chargé de boue comprend elle-même les étapes suivantes :

-descente de la nacelle sous la surface du liquide clarifié,

-attente d'un temps déterminé permettant la décantation de la boue dans le flacon et l'imprégnation de ce flacon en liquide clarifié,

-légère remontée de la nacelle, provoquant l'aspiration du flacon sous la surface du liquide clarifié,

-descente de la nacelle vers le fond du récipient - (24), à une position d'attente,

et en ce que l'étape de plongée du flacon rempli de liquide clarifié comprend elle-même les étapes suivantes:

-descente de la nacelle sous la surface du liquide clarifié puis légère remontée de cette nacelle, provoquant l'aspiration du flacon sous la surface du liquide clarifié, et

-descente de la nacelle à la position d'attente.

FIG. 1

FIG. 6

FIG. 2

FIG. 3

FIG. 4

# FIG. 5

FIG. 7

FIG. 8

FIG. 9

FIG. 10

FIG. 11

FIG. 12

FIG. 13

BCD 4

BCD 3

BCD 2

BCD 1

DIGIT UNITE

DIGIT DIZAINE

DIGIT CENTAINE

DIGIT MILLIER

HORLOGE 25 KHZ

8 COUPS
D'HORLOGE

## FIG. 14

## FIG. 15

FIG. 16

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | FR-A-2 284 108 (PONSAR) <br><br> * Page 1, ligne 1 - page 7, ligne 3; revendications 1-3,5,8,9,11; figures 1-5 * <br><br> --- | 1,2,4, 9,12 | G 01 N 9/12 <br> G 01 G 5/02 <br> G 01 G 17/04 |
| A | GB-A- 761 880 (IMPERIAL CHEMICAL INDUSTRIES LTD.) <br> * Page 3, lignes 110-120; page 5, lignes 32-42; revendications 1,2,5; figures 1,4 * <br><br> ----- | 1,6 | |

DOMAINES TECHNIQUES
RECHERCHES (Int. Cl.4)

G 01 N
G 01 G

Le présent rapport de recherche a été établi pour toutes les revendications

| Lieu de la recherche | Date d'achèvement de la recherche | Examinateur |
|---|---|---|
| LA HAYE | 01-10-1986 | ROSE A.R.P. |